(19) Europäisches Patentamt / European Patent Office / Office européen des brevets

(11) **EP 4 497 778 A1**

(12) **EUROPEAN PATENT APPLICATION**
published in accordance with Art. 153(4) EPC

(43) Date of publication:
**29.01.2025 Bulletin 2025/05**

(21) Application number: **23775026.0**

(22) Date of filing: **23.03.2023**

(51) International Patent Classification (IPC):
**C08J 5/24** (2006.01)　　**B29B 11/16** (2006.01)

(52) Cooperative Patent Classification (CPC):
**B29B 11/16; C08J 5/24**

(86) International application number:
**PCT/JP2023/011518**

(87) International publication number:
**WO 2023/182432 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022　JP 2022047185**

(71) Applicant: **Teijin Limited
Osaka 530-0005 (JP)**

(72) Inventors:
• **KAWAMOTO, Hironori
Osaka-shi, Osaka 530-0005 (JP)**
• **KANEKO, Toru
Osaka-shi, Osaka 530-0005 (JP)**

(74) Representative: **Carpmaels & Ransford LLP
One Southampton Row
London WC1B 5HA (GB)**

(54) **THERMOSETTING PREPREG AND METHOD FOR MANUFACTURING SAME**

(57) The purpose of the present invention is to provide a thermosetting prepreg having good mechanical properties and in particular having good handleability; and the present invention relates to a thermosetting prepreg including: a fiber sheet; a first thermosetting resin composition that is impregnated in the central region in the thickness direction of the fiber sheet in the cross section perpendicular to the plane direction of the fiber sheet; and a second thermosetting resin composition that is impregnated in the outer region in the thickness direction of the fiber sheet in the cross section perpendicular to the plane direction of the fiber sheet, wherein the first and second thermosetting resin compositions each contain a thermosetting resin and a curing agent, and the equivalence ratio of the curing agent in the first thermosetting resin composition is greater than the equivalence ratio of the curing agent in the second thermosetting resin composition.

Fig. 1

**Description**

[Technical Field]

The present disclosure relates to a thermosetting prepreg and a method for producing the same. In particular, the present disclosure relates to a thermosetting prepreg that can be used in the production of carbon-fiber reinforced plastics (CFRP) used in applications such as aircraft, and a process for producing the same.

[Background Art]

Carbon-fiber-reinforced composites (also referred to as a composite or CFRP) composed of carbon fibers as a reinforcing fiber and a matrix resin have characteristics such as light weight, high strength, and high elastic modulus, and are widely applied to aircrafts, sporting leisure, and general industries.

This composite material is often manufactured using a prepreg in which carbon fibers and a matrix resin are integrated with each other in advance. A composite material can be produced for example by laminating a plurality of prepregs.

Developments have been made to improve the performance of composite materials made from prepregs. For example, in general, a composite material manufactured by laminating and molding a prepreg includes a resin layer made of a matrix resin between layers of laminated carbon fiber layers. However, in general, the matrix resin used for the composite material has low electrical conductivity, and therefore, there was a case where the electrical conductivity in the thickness direction of the composite material is relatively low.

Patent Documents 1 and 2 describe that metal particles or carbon particles are blended into a matrix resin of a composite material.

Examples of a prepreg include a thermosetting prepreg. The thermosetting prepreg (thermoset prepreg) has, for example, a configuration in which a thermosetting resin such as an epoxy resin is impregnated into a reinforcing fiber sheet such as a carbon fiber sheet. A composite material can be produced for example by laminating a plurality (e.g., 24 layers) of thermosetting prepregs, followed by a thermosetting treatment (a heat-curing treatment).

Patent Document 3 describes a prepreg composed of a primary prepreg consisting of reinforcing fibers and a resin composition (I) impregnated in the reinforcing fiber layer, and a surface layer consisting of a resin composition (II) formed on one or both surfaces of the primary prepreg. According to Patent Document 3, the resin composition (I) includes an epoxy resin and a thermoplastic resin, and the resin composition (II) includes an epoxy resin and electrically conductive particles.

[Citation List]

[Patent Literature]

[Patent Literature 1] JP H6-344519A
[Patent Literature 2] JP H8-34864A
[Patent Literature 3] WO2014/050896A

[Technical Problem]

With a conventional thermosetting prepreg, it was not easy to achieve excellent mechanical properties. In particular, with a conventional thermosetting prepreg, it was not easy to achieve good handleability in addition to excellent mechanical properties.

An object of the present disclosure is to provide a thermosetting prepreg which has excellent mechanical properties and in particular further has good handling properties, as well as to provide a method for producing such a thermosetting prepreg.

[Solution to Problem]

The above problem can be solved by the following embodiments of the present invention:

<Embodiment 1> A thermosetting prepreg, comprising:

a fiber sheet;

a first thermosetting resin composition, wherein, in the cross section perpendicular to the plane direction of the fiber sheet, the first thermosetting resin composition being impregnated in the central region of the fiber sheet in the thickness direction; and

a second thermosetting resin composition, wherein, in the cross section perpendicular to the plane direction of the fiber sheet, the second thermosetting resin composition being impregnated in an outer region of the fiber sheet in the thickness direction;

wherein, each of the first and second thermosetting resin compositions comprises a thermosetting resin and a curing agent,

and wherein the equivalent ratio of the curing agent in the first thermosetting resin composition is higher than the equivalent ratio of the curing agent in the second thermosetting resin composition.

<Embodiment 2> The thermosetting prepreg according to Embodiment 1, wherein, in the cross section perpendicular to the plane direction of the fiber sheet, a ratio of the thickness of the central region to the total thickness of the central region and the outer region is 10 to 90%.

<Embodiment 3> The thermosetting prepreg according to Embodiment 1 or 2, wherein each of the first and second thermosetting resin compositions further comprises a thermoplastic resin and an electrically- conductive material.

<Embodiment 4> The thermosetting prepreg of any one of Embodiments 1 to 3, wherein the second thermosetting resin composition, which is impregnated in the outer region of the fiber sheet, is disposed on a surface of the fiber sheet.

<Embodiment 5> The thermosetting prepreg according to Embodiment 4, wherein the second thermosetting resin composition disposed on the surface of the fiber sheet has resin particles.

<Embodiment 6> The thermosetting prepreg according to Embodiment 4 or 5, wherein the second thermosetting resin composition disposed on the surface of the fiber sheet comprises an additional electrically conductive material.

<Embodiment 7> The thermosetting prepreg according to any one of Embodiments 1 to 6, wherein the viscosity of the first thermosetting resin composition at 50°C is higher than the viscosity of the second thermosetting resin composition at 50°C.

<Embodiment 8> The thermosetting prepreg according to any one of Embodiments 1 to 7, wherein the first thermosetting resin composition has a viscosity at 50°C of 500 to 10000 Pa·s, and the second thermosetting resin composition has a viscosity at 50°C of 100 to 1000 Pa·s.

<Embodiment 9> The thermosetting prepreg according to any one of Embodiments 1 to 8, wherein, when the thermosetting prepreg is heat cured at 180°C for 120 minutes, there is, in the cross section perpendicular to the plane direction of the fiber sheet, a region where a crosslink density of the thermosetting resin is decreased from the center toward the surface of the fiber sheet in the thickness direction.

<Embodiment 10> The thermosetting prepreg of any one of Embodiments 1 to 9, wherein the thermosetting resin is an epoxy resin.

<Embodiment 11> A laminate of thermosetting prepregs, having a structure in which two or more thermosetting prepregs according to any one of Embodiments 1 to 10 are laminated.

<Embodiment 12> A method for producing a thermosetting prepreg, comprising:

(a) providing a thermosetting prepreg precursor sheet, wherein the precursor sheet has a fiber sheet and first and second thermosetting resin compositions, each of these compositions being impregnated in the fiber sheet and containing a thermosetting resin and a curing agent, and wherein, in the cross section perpendicular to the plane direction of the fiber sheet, the first thermosetting resin composition is impregnated in a first outer region in the thickness direction of the fiber sheet, and the second thermosetting resin composition is impregnated in a second outer region which is opposite to the first outer region in the thickness direction of the fiber sheet; and

(b) arranging the two thermosetting prepreg precursor sheets on top of each other such that the first outer region of the fiber sheet of one of the thermosetting prepreg precursor sheets faces the first outer region of the fiber sheet of the other of the thermosetting prepreg precursor sheets;

wherein, in the thermosetting prepreg precursor sheets, an equivalent ratio of the curing agent in the first thermosetting resin composition is higher than an equivalent ratio of the curing agent in the second thermosetting resin composition.

<Embodiment 13> A method for producing a thermosetting prepreg precursor sheet, comprising:

providing a fiber sheet,

providing a first thermosetting resin composition comprising a thermosetting resin and a curing agent;
providing a second thermosetting resin composition comprising a thermosetting resin and a curing agent;
arranging the first thermosetting resin composition on one main surface of the fiber sheet;
arranging the second thermosetting resin composition on the other main surface of the fiber sheet; and
impregnating the fiber sheet with at least part of the first thermosetting resin composition and the second thermosetting resin composition;

wherein an equivalent ratio of the curing agent in the first thermosetting resin composition is higher than the equivalent ratio of the curing agent in the second thermosetting resin composition.

<Embodiment 14> The method according to Embodiment 13, wherein a ratio of a basis weight M1 ($g/m^2$) of the first thermosetting resin composition in the form of a sheet to a basis weight M2 ($g/m^2$) of the second thermosetting resin composition in the form of a sheet is 0.25 to 4.0.

<Embodiment 15> The method according to Embodiment 13 or 14, wherein the second thermosetting resin composition further comprises resin particles.

[Advantageous Effects of Invention]

According to the present invention, a thermosetting prepreg having excellent mechanical properties and a method for producing the same can be provided. In particular, according to the present invention, it is possible to provide a thermosetting prepreg having excellent mechanical properties and good handleability, and a method for producing the same.

[Brief Description of Drawings]

[Fig. 1] FIG. 1 shows a cross sectional schematic view of a thermosetting prepreg according to one embodiment of the present disclosure.
[Fig. 2] FIG. 2 shows a conceptual diagram of one embodiment of the method for producing a thermosetting prepreg according to the present disclosure.
[Fig. 3] FIG. 3 shows a conceptual diagram of one embodiment of the method of producing a thermosetting prepreg precursor sheet according to the present disclosure.

[Mode for carrying out the present invention]

The thermosetting prepreg according to the present invention comprises:

a fiber sheet,
a first thermosetting resin composition, wherein, in the cross section perpendicular to the plane direction of the fiber sheet, the first thermosetting resin composition is impregnated in a central region of the fiber sheet in the thickness direction; and
a second thermosetting resin composition, wherein, in the cross section perpendicular to the plane direction of the fiber sheet, the second thermosetting resin composition is impregnated in an outer region of the fiber sheet in the thickness direction,

wherein, each of the first and second thermosetting resin compositions comprises a thermosetting resin and a curing agent,
and wherein an equivalent ratio of the curing agent in the first thermosetting resin composition is higher than an equivalent ratio of the curing agent in the second thermosetting resin composition.

Hereinafter, the thermosetting prepreg according to the present invention will be specifically described with reference to the drawings. The drawings are schematic illustrations for the purpose of helping understanding of the present invention and are not to scale and are not intended to limit the invention.

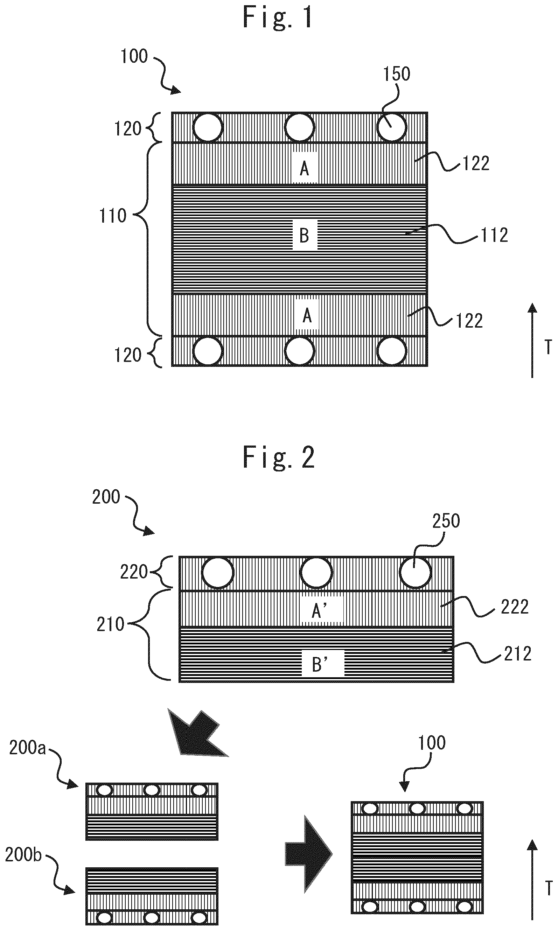

FIG. 1 is a schematic cross sectional schematic view of a thermosetting prepreg according to one embodiment of the present disclosure, showing the cross section of the thermosetting prepreg when cut in a cross section perpendicular to the plane direction of the fiber sheet. "T" in FIG. 1 shows the thickness direction of the thermosetting prepreg.

The thermosetting prepreg 100 depicted in FIG. 1 includes a fiber sheet 110. The fiber sheet 110 is in particular a carbon fiber sheet. A first thermosetting resin composition 112 is impregnated into the central region (B) of the fiber sheet 110 in the thickness direction thereof. The first thermosetting resin composition 112 comprises a thermosetting resin and a curing agent, and optionally further comprises a thermoplastic resin and an electrically conductive material.

Further, the thermosetting prepreg 100 comprises the second thermosetting resin composition 122 which is impregnated in the outer region (A) of the fiber sheet 110 in the thickness direction thereof. The second thermosetting resin composition 122 comprises a thermosetting resin and a curing agent, and optionally further comprises a thermoplastic resin and an electrically conductive material.

In addition, in the thermosetting prepreg 100 according to FIG. 1, the second thermosetting resin composition 122 is disposed on the surface of the fiber sheet 110. In FIG. 1, the second thermosetting resin composition 122 disposed on the surface forms a resin layer 120. The resin layer 120 of FIG. 1 comprises resin particles 150.

In the thermosetting prepreg 100 of FIG. 1, the equivalent ratio of the curing agent in the first thermosetting resin composition is higher than the equivalent ratio of the curing agent in the second thermosetting resin composition. Therefore, in the thermosetting prepreg 100, the equivalent ratio of the curing agent in the central region (B) of the thermosetting prepreg is larger than the equivalent ratio of the curing agent in the outer region (A).

The "equivalent ratio" of curing agent(s) in a thermosetting resin composition can be calculated by the following Formula 1:

Equivalent ratio of curing agent(s) = (total number of moles of active hydrogen of the curing agent)/(total number of moles of polymerizable groups of the thermosetting resin)          (Formula 1)

In particular, when the thermosetting resin is an epoxy resin, the equivalent ratio of curing agent(s) can be calculated by the following Formula 1':

Equivalent ratio of curing agent(s) = (total number of moles of active hydrogen of the curing agent)/ (total number of moles of epoxy groups of the epoxy resin)          (Formula 1')

Without wishing to be bound by theory, it is considered that when the thermosetting prepreg according to the present disclosure as described above is subjected to a thermosetting treatment, a relatively high crosslink density of the thermosetting resin can be obtained inside the fiber sheet, so that the elasticity of a matrix resin is improved, and as a result, the mechanical properties are improved.

In particular, with regard to a thermosetting prepreg 100, in the cross section perpendicular to the plane direction of the fiber sheet, the ratio of the thickness of the central region to the total thickness of the central region and the outer region is 10 to 90%.

In one embodiment of the present disclosure, at least one of the first thermosetting resin composition 112 and the second thermosetting resin composition 122 further contains a thermoplastic resin and/or an electrically conductive material (in particular, electrically conductive particles). By containing an electrically conductive material, the electrical conductivity of a thermosetting prepreg can be further improved. Further, by containing a thermoplastic resin, the handling properties of a thermosetting prepreg can be further improved. The handling properties of a thermosetting prepreg mean, in particular, the handling property at the time when a plurality of thermosetting prepregs are automatically laminated (automatic lamination property).

In another embodiment of the present disclosure, the viscosity at 50°C of the first thermosetting resin composition is higher than the viscosity at 50°C of the second thermosetting resin composition. In this case, it is considered that particularly good tackiness can be obtained, and as a result of which particularly good handleability (in particular, automatic lamination property) of a thermosetting prepreg can be realized.

In particular, the viscosity of the first thermosetting resin composition at 50°C is 500 to 10000 Pa·s, and the viscosity of the second thermosetting resin composition at 50°C is 100 to 1000 Pa·s.

The method for producing the thermosetting prepreg according to the present disclosure is not particularly limited, but it can be produced in particular by the method for producing a thermosetting prepreg according to the present disclosure described below.

The method for producing a thermosetting prepreg according to the present disclosure comprises the following steps (a) and (b):

(a) providing thermosetting prepreg precursor sheets, wherein the precursor sheets have a fiber sheet and first and second thermosetting resin compositions, each of these compositions being impregnated in the fiber sheet and containing a thermosetting resin and a curing agent, and wherein, in the cross section perpendicular to the plane direction of the fiber sheet, the first thermosetting resin composition is impregnated in a first outer region of the fiber sheet in the thickness direction thereof, and the second thermosetting resin composition is impregnated in a second outer region of the fiber sheet which is opposite to the first outer region in the thickness direction;

and

(b) arranging the two thermosetting prepreg precursor sheets on top of each other such that the first outer region of the fiber sheet of one of the thermosetting prepreg precursor sheets faces the first outer region of the fiber sheet of the other of thermosetting prepreg precursor sheets;

wherein, in the thermosetting prepreg precursor sheets, an equivalent ratio of the curing agent in the first thermosetting resin composition is higher than an equivalent ratio of the curing agent in the second thermosetting resin composition.

In general, in a prepreg, for example, different functions are required for a fiber sheet portion and a resin layer portion of the prepreg, and thus the physical properties required for each of these portions are also different. In the conventional method, it is not easy to realize such site-specific optimization of physical properties.

On the other hand, the method for producing a thermosetting prepreg according to the present disclosure uses a precursor sheet containing a plurality of resin compositions having different constitutions. In other words, according to the production method of the present disclosure, since a thermosetting prepreg is manufactured using precursor sheets impregnated with the plurality of resin compositions having different constitutions, it is possible to realize a thermosetting prepreg having properties optimized in a site-specific manner.

Further, in a conventional method for producing a thermosetting prepreg, when a resin composition is impregnated into a fiber sheet, the degree of impregnation of the resin composition into the central portion of the fiber sheet may be reduced due to the impregnation properties of the resin composition. In particular, when the degree of impregnation of a curing agent in the central region of a fiber sheet is low, the mechanical properties of the fiber sheet may be deteriorated.

On the other hand, in the above method according to the present disclosure, a thermosetting prepreg is produced by superposing two thermosetting prepreg precursor sheets, and at the time of this superposition, out of the two outer regions in the thickness direction of each of the precursor sheets, the one having a resin composition with a relatively large equivalent ratio of a curing agent is superposed to that of the other precursor sheet. According to such a method, it is possible to increase the amount of the curing agent distributed in the central portion of the resulting thermosetting prepreg.

FIG. 2 conceptually illustrates a manufacturing method according to one embodiment of the present disclosure. A thermosetting prepreg precursor sheet 200 of FIG. 2 comprises a fiber sheet 210. The first outer region (B') in the thickness direction of the fiber sheet 210 is impregnated with the first thermosetting resin composition 212. The second outer region (A') in the thickness direction of the fiber sheet 210 is impregnated with the second thermosetting resin composition 222. In the embodiment of FIG. 2, the second thermosetting resin composition 222 is disposed on the main surface of the fiber sheet 210 to form a resin layer 220. The resin layer 220 includes resin particles 250. In the thermosetting prepreg precursor sheet 200 of FIG. 2, the equivalent ratio of the curing agent in the first thermosetting resin composition 212 is higher than the equivalent ratio of the curing agent in the second thermosetting resin composition 222.

Further, in the method according to FIG. 2, two thermosetting prepreg precursor sheets 200a, 200b are arranged on top of each other, such that the first outer region of the fiber sheet of one thermosetting prepreg precursor sheet 200a faces the first outer region of the fiber sheet of the other thermosetting prepreg precursor sheet 200b. Particularly preferably, the surfaces adjacent to the first outer regions are in contact with each other, either directly or via the resin composition. Preferably, after the two thermosetting prepreg precursor sheets 200a and 200b are arranged on top of each other, a treatment for integrating these precursor sheets, for example a heat and pressure treatment, can be carried out.

According to the manufacturing method of the present disclosure as describe above, it is possible to obtain a thermosetting prepreg 100 in which, in the cross section perpendicular to the plane direction of the sheet, the amount of the curing agent in the central region in the thickness direction is higher than the amount of the curing agent in the outer region in the thickness direction.

A method for producing a thermosetting prepreg precursor sheet is not particularly limited, but may be produced in particular by the method for producing a thermosetting prepreg precursor sheet according to the present disclosure, the method including the following steps:

providing a fiber sheet,
providing a first thermosetting resin composition comprising a thermosetting resin and a curing agent;
providing a second thermosetting resin composition comprising a thermosetting resin and a curing agent;
arranging the first thermosetting resin composition on one main surface of the fiber sheet;
arranging the second thermosetting resin composition on the other main surface of the fiber sheet; and
impregnating the fiber sheet with at least part of the first thermosetting resin composition and the second thermosetting resin composition;
wherein an equivalent ratio of the curing agent in the first thermosetting resin composition is higher than the equivalent ratio of the curing agent in the second thermosetting resin composition.

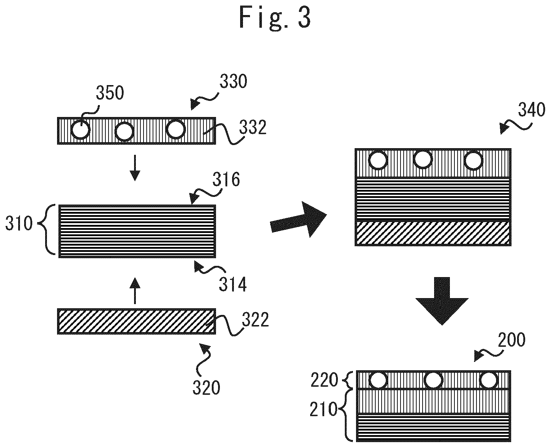

FIG. 3 is a conceptual diagram illustrating one embodiment of the method for producing a thermosetting prepreg precursor sheet according to the present disclosure.

In the method according to FIG. 3, a fiber sheet 310 having a first main surface 314 and a second main surface 316 are provided, and on the first major surface 314, a sheet 320 formed from the first thermosetting resin composition 322 is disposed, and on the second major surface 316, a sheet 330 formed from the second thermosetting resin composition 332 is disposed. In this embodiment, the equivalent ratio of the curing agent contained in the first thermosetting resin composition 322 is higher than the equivalent ratio of the curing agent contained in the second thermosetting resin composition 332. The sheet 330 of FIG. 3 includes resin particles 350.

Then, to the intermediate laminate 340 thus formed, at least part of each of the resin compositions 322 and 332 can be impregnated into the fiber sheet 310, by applying heat and/or pressure, for example, using a heat roller, in order to obtain the thermosetting prepreg precursor sheet 200.

According to this method, since the fiber sheet can be simultaneously impregnated with the first thermosetting resin composition and the second thermosetting resin composition, the impregnation properties of the second thermosetting resin composition into the fiber sheet can be further improved, as compared with a case where the fiber sheet is first impregnated with the first thermosetting resin composition and then impregnated with the second thermosetting resin composition.

Embodiments and components of the present invention will be described in more detail below.

<<thermosetting prepreg>>

The thermosetting prepreg according to the present disclosure comprises a fiber sheet, a first thermosetting resin composition, and a second thermosetting resin composition.

In the context of the present disclosure, the basis weight of fiber of the thermosetting prepreg may be, for example, 50 to 1000 $g/m^2$, 100 to 800 $g/m^2$, in particular 200 to 600 $g/m^2$. The thickness of the thermosetting prepreg may be, for example, 0.02 mm to 3.6 mm, 0.04 mm to 2.9 mm, or 0.08 mm to 2.2 mm.

<Fiber Sheet>

The fiber sheet contained in the thermosetting prepreg according to the present disclosure is, in particular, a reinforcing fiber sheet composed of reinforcing fibers. The reinforcing fiber sheet is preferably a carbon fiber sheet.

Examples of the reinforcing fibers include carbon fibers, glass fibers, aramid fibers, silicon carbide fibers, polyester fibers, ceramic fibers, alumina fibers, boron fibers, metal fibers, mineral fibers, rock fibers, and slag fibers. Among these reinforcing fibers, carbon fibers, glass fibers, and aramid fibers are preferable, and carbon fibers are more preferable, since they have good specific strength and specific elastic modulus and make it possible to obtain a lightweight and high-strength composite material. Among the carbon fibers, polyacrylonitrile (PAN)-based carbon fibers are particularly preferable, which have excellent tensile strength.

When carbon fibers are used as a reinforcing fiber, the tensile modulus thereof is preferably 170 GPa to 600 GPa, and particularly preferably 220 GPa to 450 GPa. Further, the tensile strength is preferably 3920 MPa or more. The upper limit of the tensile strength is not particularly limited, but may be, for example, 10000 MPa or less. By using such carbon fibers, the mechanical properties of a composite material can be improved. The tensile strength and the tensile modulus of a carbon fiber can be measured in accordance with the standard JIS R 7608.

Examples of the fiber sheet include an article in the form of a sheet in which a large number of fibers (especially reinforcing fibers) are aligned in one direction, bi-directional fabric such as plain or twill woven fabric, a multi-axial woven fabric, non-woven fabric, a mat, a knit, a braid, paper made from fibers (especially reinforcing fibers).

The thickness of the fiber sheet may be 0.02 to 3.6 mm, 0.04 to 2.9 mm, or 0.08 to 2.2 mm. The basis weight of the fiber sheet may be 50 to 1000 $g/m^2$, preferably 100 to 800 $g/m^2$, and more preferably 200 to 600 $g/m^2$. The distance between fibers in the fiber sheet is preferably less than 10 $\mu m$.

The content of a fiber sheet in a thermosetting prepreg is preferably 40 to 80% by mass, more preferably 45 to 75% by mass, and even more preferably 50 to 70% by mass, based on the total weight of a thermosetting prepreg.

<Resin composition>

The fiber sheet is impregnated with the first thermosetting resin composition in its central region in the thickness direction, and is impregnated with the second thermosetting resin composition in its outer region in the thickness direction.

(Central region and outer region)

In one embodiment according to the present disclosure, in the cross section perpendicular to the plane direction of a fiber sheet, the ratio of the thickness of the central region to the total thickness of the central region and the outer region of the fiber sheet is 10 to 90%. In general, the fiber sheet has two main surfaces, and the outer region of the fiber sheet are in particular regions of the fiber sheet each of which extends along one of the two main surfaces of the fiber sheet.

(Viscosity)

Preferably, the viscosity (V1 (units: Pa·s)) at 50°C of the first thermosetting resin composition is higher than the viscosity (V2 (units: Pa·s)) at 50°C of the second thermosetting resin composition, and in particular, the difference between these viscosities (V1-V2) is 10 or more, 25 or more, 50 or more, 75 or more, 100 or more, 150 or more, 200 or more, 250 or more, 300 or more, 400 or more, or 500 or more. The upper limit of the difference (V1-V2) may be, for example, 3000 or less, 2600 or less, 2000 or less, 1500 or less, 1000 or less, or 750 or less.

The viscosity at 50°C of the first thermosetting resin composition is preferably 500 to 10000 Pa·s, or 550 to 5000 Pa·s, more preferably 600 to 3000 Pa·s, or 600 to 2000 Pa·s, even more preferably 650 to 1500 Pa·s or 650 to 1000 Pa·s, most preferably 700 to 900 Pa·s. When the viscosity of a first thermosetting resin composition at 50°C is within this range, particularly good impregnation of the resin composition into a fiber sheet may be obtained.

The viscosity at 50°C of the second thermoset composition is preferably 100 to 1250 Pa·s, 100 to 1000 Pa·s or 200 to 1000 Pa·s, more preferably 400 to 800 Pa·s, even more preferably 500 to 750 Pa·s. When the viscosity of the second thermosetting resin composition at 50°C is within this range, particularly good impregnation of the resin composition into a fiber sheet can be obtained, and particularly good handleability of a thermosetting prepreg can be obtained.

Viscosity can be determined from a temperature-viscosity curve measured using a rheometer.

The viscosity of a thermosetting resin composition can be adjusted by selecting the amount and/or type of a thermosetting resin and/or curing agent contained in the thermosetting resin composition, and can be further adjusted by selecting the amount and/or type of optional components, i.e., a thermoplastic resin, resin particles, and/or electrically conductive material.

Each of the first thermosetting resin composition and the second thermosetting resin composition comprises at least a thermosetting resin and a curing agent. These resin compositions may further comprise a thermoplastic resin and/or an electrically conductive material.

(Thermosetting resin)

The thermosetting resin can be crosslinked by being heated in the presence of a curing agent to form a three-dimensional molecular structure (e.g., a network structure). The thermosetting resin may include a heat-curable monomer and/or an oligomer and/or a prepolymer. Examples of the thermosetting resin include an epoxy resin and a urethane resin, in particular an epoxy resin. One kind of the thermosetting resin may be used alone, or two or more kinds thereof may be used in combination.

An epoxy resin is crosslinked by a curing reaction with a curing agent so as to form a network structure. Examples of the epoxy resin include conventionally known epoxy resins, and in particular, an epoxy resin having an aromatic group in a molecular structure, and in particular, di- functional or tri- or higher functional epoxy resins having either a glycidyl amine structure or a glycidyl ether structure. An alicyclic epoxy resin may also be mentioned.

Examples of the epoxy resin having a glycidyl amine structure include N,N,N', N'-tetraglycidyl diaminodiphenylmethane, N,N,O-triglycidyl-p-aminophenol, N,N,O-triglycidyl-m-aminophenol, N,N,O-triglycidyl-3-methyl-4-aminophenol, and triglycidyl aminocresol, and various isomers thereof.

Examples of the epoxy resin having a glycidyl ether structure include a bisphenol A type epoxy resin, a bisphenol F type epoxy resin, a bisphenol S type epoxy resin, a phenol novolak type epoxy resin, and a cresol novolak type epoxy resin.

These epoxy resins may have a non-reactive substituent in an aromatic ring structure, etc., if necessary. Such a non-reactive substituent includes an alkyl group such as methyl groups, ethyl groups and isopropyl groups, an aromatic group such as a phenyl group, alkoxyl groups, aralkyl groups, and a halogen group (such as chlorine, bromine).

Examples of the tri-functional epoxy resin include N,N,O-triglycidyl-p-aminophenol, N,N,O-triglycidyl-m-aminophenol.

These epoxy resins may be used alone or in combination of two or more thereof. Incidentally, as the epoxy resin, for example, an epoxy resin preliminarily reacted with a curing agent, etc., a so-called B-stage epoxy resin, may be used. When both of the first thermosetting resin composition and the second thermosetting resin composition have an epoxy resin as a thermosetting resin, they may be the same or different from each other.

The thermosetting resin can impart good mechanical properties and tackiness to the thermosetting prepreg.

(Curing agent)

The curing agent is in particular a curing agent for a thermosetting resin, for example a curing agent for an epoxy resin or a urethane resin. Examples of the curing agent for an epoxy resin include dicyandiamide, various isomers of aromatic amine curing agents, and esters of aminobenzoic acid. One type of curing agent may be used alone , or two or more types of curing agents may be used in combination. In addition, the first thermosetting resin composition and the second thermosetting resin composition may comprise the same curing agent, or may comprise different curing agents.

The dicyandiamide is preferable because it provides excellent storage stability of a prepreg. Further, aromatic diamine compounds such as 4,4'-diaminodiphenylsulfone, 3,3'-diaminodiphenylsulfone, and 4,4'-diaminodiphenylmethane, and derivatives thereof having a non-reactive substituent are particularly preferred from the viewpoint of providing a cured product with high heat resistance. Examples of the non-reactive substituent include an alkyl group such as a methyl group, an ethyl group, an isopropyl group, an aromatic group such as a phenyl group, an alkoxyl group, an aralkyl group, and a halogen group (such as chlorine, bromine).

Examples of the ester of amino benzoic acid include trimethylene glycol di-p-aminobenzoate and neopentyl glycol di-p-aminobenzoate. When these compounds are used as a curing agent, a composite material having a particularly excellent tensile elongation can be obtained, although the heat resistance of the composite material can be inferior as compared to the case of diaminodiphenylsulfone.

The thermosetting resin and the curing agent may have an effect of improving mechanical properties (in particular, elastic modulus and strength) and/or heat resistance of a matrix resin of a thermosetting prepreg.

(Equivalent ratio)

The equivalent ratio of curing agent(s) in the first thermosetting resin composition is preferably from 0.70 to 1.00, more preferably from 0.75 to 0.90. When the equivalent ratio of curing agent(s) is within this range, it is possible to obtain particularly good handling properties of a thermosetting prepreg and physical properties (in particular, mechanical properties) of a composite material formed from a thermosetting prepreg.

The equivalent ratio of curing agent(s) in the second thermosetting resin composition is preferably from 0.50 to 0.90, more preferably from 0.60 to 0.80. When the equivalent weight ratio of curing agent(s) is within this range, it is possible to obtain particularly good handling properties of a thermosetting prepreg and physical properties (in particular, mechanical properties) of a composite material formed from a thermosetting prepreg.

The difference (E1-E2) between the equivalent ratio (E1) of the curing agent in the first thermosetting resin composition and the equivalent ratio (E2) of the curing agent in the second thermosetting resin composition may be 0.01 or more, 0.05 or more, or 0.10 or more, and/or may be 1.0 or less, 0.50 or less, 0.40 or less, 0.30 or less, 0.20 or less, 0.18 or less, or 0.16 or less.

The content of the curing agent in the thermosetting resin composition may be 5 to 70 parts by mass, 10 to 60 parts by mass, 20 to 50 parts by mass, or 30 to 45 parts by mass with respect to 100 parts by mass of a thermosetting resin.

(Crosslink density)

In a particular, when the thermosetting prepreg according to the present disclosure is heat-cured (i.e., subjected to a thermosetting treatment) at 180°C for 120 minutes, there is, in the cross section perpendicular to the plane direction of the fiber sheet, a region in which a crosslink density of the thermosetting resin decreases from the center toward the surface in the thickness direction of the fiber sheet.

The crosslink density ($\rho_{crosslink}$) (units: $mol/m^3$) of a thermosetting resin, in the cross section perpendicular to the plane direction of a fiber sheet, can be calculated by measuring the glass transition temperature (Tg) for a cured product of a resin composition by DMA (Dynamic Viscoelasticity Measurement), and then using the equation of state for rubber shown in Equation (2).

$$\rho_{crosslink} = E'/\ 3\ \varphi RT \qquad \text{Equation (2)}$$

In Equation (2), E' represents a storage elastic modulus at Tg+50°C (unit: Pa), $\varphi$ represents a front coefficient (here, $\varphi=1$ (unit: dimensionless)), R represents the gas constant (8.31 J/K·mol), and T represents a temperature at Tg+50 °C (unit: K).

DMA measurement is performed using a dynamic-viscoelasticity measuring device, for example, a Rheogel-4000 (manufactured by UBM Co., Ltd.), under the condition of a double-holding bending mode, a strain amplitude of 5 $\mu$m, a heating rate of 5°C/min, and a frequency of 1 Hz and under air; and the onset of the obtained storage elastic modulus is determined as Tg.

(Thermoplastic resin)

The thermoplastic resin is preferably a thermoplastic resin that is soluble in a thermosetting resin. The thermoplastic resin is in particular a thermoplastic resin soluble in epoxy resin. The resin composition may contain, in addition to a soluble thermoplastic resin (in particular, a thermoplastic resin soluble in epoxy resin), an insoluble thermoplastic resin composition which is insoluble in a thermosetting resin (in particular, a thermoplastic resin composition insoluble in epoxy resin). One type of the thermoplastic resin may be used alone, or two or more types thereof may be used in combination.

The thermoplastic resin may improve the impregnation of a thermosetting resin composition into a fiber sheet. Further, the thermoplastic resin may have an effect of improving the tackiness of a thermosetting prepreg. In addition, the thermoplastic resin may have an effect of improving the mechanical properties (in particular, toughness) of a matrix resin of a thermosetting prepreg.

The amount of the thermoplastic resin in a resin composition is not particularly limited, but may be set according to a desired viscosity of a thermosetting resin composition, etc. For example, the amount of the thermoplastic resin in each of the first and second thermosetting resin compositions may be 1 to 60 parts by mass, in particular, 2 to 50 parts by mass, 5 to 40 parts by mass, 10 to 30 parts by mass, or 15 to 25 parts by mass, based on 100 parts by mass of the thermosetting resin (in particular, an epoxy resin).

In one embodiment according to the present disclosure,

the first thermosetting resin composition may contain 1 to 50 parts by mass, 2 to 40 parts by mass, 5 to 30 parts by mass, or 10 to 25 parts by mass of a soluble thermoplastic resin (in particular a thermoplastic resin soluble in epoxy resin) with respect to 100 parts by mass of the thermosetting resin (in particular an epoxy resin), and/or the second thermosetting resin composition may contain 1 to 50 parts by mass, 2 to 40 parts by mass, 5 to 30 parts by mass, or 10 to 25 parts by mass of a soluble thermoplastic resin (in particular a thermoplastic resin soluble in epoxy resin), and 1 to 50 parts by mass, 2 to 40 parts by mass, 5 to 30 parts by mass, 8 to 25 parts by mass, or 10 to 20 parts by mass of an insoluble thermoplastic resin composition (in particular a thermoplastic resin composition insoluble in epoxy resin), with regard to 100 parts by mass of the thermosetting resin (in particular an epoxy resin).

(Thermoplastic resin soluble in epoxy resin)

The thermoplastic resin soluble in epoxy resin is a thermoplastic resin a part or all of which can be dissolved in an epoxy resin by heating, et. The thermoplastic resin soluble in epoxy resin is preferably a resin 80% by mass or more of which can be dissolved in an epoxy resin at 190°C Examples of the thermoplastic resin soluble in epoxy resin include polyethersulfone, polysulfone, polyetherimide, and polycarbonate. These may be used alone or two or more thereof can be used in combination. The insoluble thermoplastic resin composition (the thermoplastic resin composition insoluble in epoxy resin) will be described later.

The form of the thermoplastic resin soluble in epoxy resin is not particularly limited. Incidentally, in particular in a resin composition used in production of a thermosetting prepreg, the thermoplastic resin soluble in epoxy resin is preferably in the form of a particle, and the mean particle diameter thereof is preferably 1 to 50 $\mu$m, and particularly preferably 3 to 30 $\mu$m. The average particle diameter of a thermoplastic resin in the form of particles can be measured by a laser diffraction/scattering particle diameter distribution measurement apparatus.

When both the first thermosetting resin composition and the second thermosetting resin composition contain a thermoplastic resin, they may be the same or different from each other.

(Electrically conductive material)

The electrically conductive material can, when it is present in a fiber sheet and in particular in a resin layer, improve an electrical conductivity of a thermosetting prepreg.

The electrically conductive material is not particularly limited as long as it is a particle that behaves as a good electrical conductor, but is preferably one that can be dispersed in a resin composition and can improve an electrical conductivity of a thermosetting prepreg.

The electrically conductive material is in particular electrically conductive particles. The electrically conductive particles are preferably particles having a volume resistivity of from 10 to $10^{-9}$ $\Omega$cm, more preferably from 1 to $10^{-9}$ $\Omega$cm, and particularly preferably from $10^{-1}$ to $10^{-9}$ $\Omega$cm.

Examples of the electrically conductive particles include electrically conductive polymer particles, carbon particles, metal particles, coated conductive particles, and carbon fiber particles. These may be used alone or in combination.

Examples of the electrically conductive polymer particles include polyacetylene particles, polyaniline particles, polypyrrole particles, polythiophene particles, polyisothiana phthene particles, and polyethylenedioxythiophene particles.

Examples of the carbon particles include carbon black, carbon nanotubes (CNT), carbon nanostructures (CNS), carbon nanofibers, expanded graphite, scaly graphite, graphite powder, graphite particles, graphene sheets, and carbon milled fibers. Examples of the carbon milled fiber include milled fibers of PAN-based carbon fibers, pitch-based carbon fibers, and phenolic carbon fibers. Among these, milled fibers of pitch-based carbon fibers are preferable. The carbon fiber content of carbon milled fibers is preferably 94% by mass or more.

Although there is no particular limitation with regard to the metal particles, if carbon fibers are used as a reinforcing fiber, particles of platinum, gold, silver, copper, tin, nickel, titanium, cobalt, zinc, iron, chromium, and aluminum, particles of an alloy containing these metals as a main component, tin oxide, indium oxide, and indium tin oxide (ITO), are preferable from the viewpoint of preventing corrosion due to a potential difference between the metal particles and the carbon fiber. Among these, the particles of each of platinum, gold, silver, copper, tin, nickel and titanium, and the particles of an alloy containing these metals as a main component are more preferable, and the particles of each of silver, copper and nickel are particularly preferable, because they exhibit high conductivity and stability.

Preferred examples of the electrically conductive particles include carbon nanotubes, carbon nanostructures, carbon black, carbon milled fibers, and silver nanoparticles.

The electrically conductive material preferably has a size that allows a diffusion into a fiber sheet when a resin composition is impregnated into the fiber sheet. The electrically conductive material is preferably in the form of a particle (i.e. an electrically conductive particle) and has an mean particle size of, for example, 1 to 1000 nm or 1 to 500 nm, preferably, 2 to 200 nm, 3 to 100 nm, 4 to 50 nm, or 5 to 25 nm.

It is considered that electrically conductive particles having a relatively small particle size (e.g., a particle size of $1\mu m$ or less) can further improve an electrical conductivity of a composite material formed from a prepreg as a result that the electrically conductive particles are dispersed in both a fiber sheet and a resin layer.

The mean particle size of the electrically conductive material refers to a 50% particle size ($D_{50}$) in a particle size distribution measured using a laser diffraction/scattering particle size distribution analyzer.

The content of the electrically conductive material (in particular electrically conductive particles) may be 0.01 to 10 parts by mass, preferably 0.05 to 5 parts by mass, and more preferably 0.10 to 1 parts by mass, with respect to 100 parts by mass of a thermosetting resin (particularly, an epoxy resin) contained in a resin composition. When the amount is 0.01 parts by mass or more, the effect of improving the electrical conductivity of a prepreg and a composite material can become particularly good. When the amount is 10 parts by mass or less, the viscosity of a resin composition is prevented from being remarkably increased, and good handleability of a prepreg can be ensured.

When both the first thermosetting resin composition and the second thermosetting resin composition contain an electrically conductive material, they may be the same or may be different from each other.

(Additional electrically conductive material)

The thermosetting prepreg may comprise an additional electrically conductive material in addition to the electrically conductive material described above. This additional electrically conductive material is in particular intended to be present in the second thermosetting resin composition present on the surface of a fiber sheet (in particular in a resin layer described below). In other words, in one embodiment of the present disclosure, the second thermosetting resin composition disposed on the surface of a fiber sheet contains an additional electrically conductive material.

Examples of the additional conductive materials include carbon fibers, pitch-based carbon fibers, milled fibers (in particular, carbon milled fibers), silver aggregates. These may be used alone or in combination.

The additional electrically conductive material preferably has an average length of greater than or equal to 1 $\mu m$, or greater than or equal to 1.5 $\mu m$, more preferably greater than or equal to 2 $\mu m$, particularly preferably greater than or equal to 4 $\mu m$. The upper limit of the average length of the additional electrically conductive material is not particularly limited, but may be, for example, 10 mm or less, 1 mm or less, 300 $\mu m$ or less, 200 $\mu m$ or less, or 100 $\mu m$ or less. If the additional electrically conductive materials has such a length, they tend to remain on the surface of a fiber sheet (in particular in a resin layer) as a result that the additional electrically conductive materials have a difficulty in entering the fiber sheet. The additional electrically conductive material present on the surface of a fiber sheet (in particular in a resin layer) can further improve the overall electrical conductivity of a thermosetting prepreg.

The average length of the additional electrically conductive material can be calculated by measuring the lengths of 30 or more additional electrically conductive materials in an image acquired using an electron microscope or an optical microscope, and averaging the obtained measurements. In the case where the additional electrically conductive material is in the form of particles, the mean diameter or the mean particle diameter thereof may be used as the average length.

When both the first thermosetting resin composition and the second thermosetting resin composition contain an additional electrically conductive material, they may be the same or different from each other.

(Resin layer)

In one embodiment of the thermosetting prepreg according to the present disclosure, the second thermosetting resin composition, which is impregnated in the outer region of a fiber sheet, is disposed on the surface of the fiber sheet. In particular, the second thermosetting resin composition forms a resin layer (a surface resin layer) on the surface of a fiber sheet.

The resin layer is preferably laminated on the main surface of a fiber sheet, particularly preferably directly laminated on the main surface of a fiber sheet.

The thickness of the resin layer is preferably 5 to 50 $\mu$m, in particular 10 to 40 $\mu$m. When the thickness is 5 $\mu$m or more, a thermosetting prepreg having particularly good tackiness may be obtained. When the thickness is 50 $\mu$m or less, a thermosetting prepreg having particularly good handling properties may be obtained, and particularly good moldability during manufacturing a composite material may be ensured.

(Resin particles)

The second thermoplastic resin composition disposed on the surface of a fiber sheet (in particular, a resin layer) may comprise resin particles. The resin particles are preferably dispersed in a resin layer. These resin particles can be present in a resin layer between fiber sheets in a laminate made by laminating thermosetting prepregs, and are therefore also referred to as "interlayer particles".

The resin particles contained in a resin layer have an effect of improving the interlayer toughness of a composite material (in particular, a carbon-fiber-reinforced composite material) formed from a thermosetting prepreg.

The resin particles contained in a resin layer may be composed of a thermoplastic resin. The resin particles are preferably hardly soluble in a thermosetting resin, and in particular composed of a thermoplastic resin insoluble in epoxy resin.

(Thermoplastic resin insoluble in epoxy resin)

The thermoplastic resin insoluble in epoxy resin refers to a thermoplastic resin which does not substantially dissolve in an epoxy resin at or below the temperature at which a composite material is molded. In particular, it refers to a thermoplastic resin in which the size of resin particles does not change when the resin particles are charged into an epoxy resin and stirred at a temperature at which a composite material is molded. In general, the molding temperature of a composite material is 100 to 190°C.

Examples of the thermoplastic resin insoluble in epoxy resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole. Among them, polyamide, polyamideimide, and polyimide are preferred because of their high toughness and heat resistance. These may be used alone or two or more thereof may be used in combination. Copolymers thereof can also be used.

In particular, amorphous polyimides, and polyamides, such as nylon 6 (trademark) (polyamide obtained by ring-opening polycondensation reaction of caprolactam), nylon 12 (trademark) (polyamide obtained by ring-opening polycondensation reaction of lauryl lactam), and amorphous nylon (trademark), can be used. By using these polyamides, a composite material having particularly good heat resistance may be obtained.

The mean particle size of the resin particles contained in a resin layer is preferably 5 to 50 $\mu$m, particularly 10 to 40 $\mu$m.

The mean particle size of resin particles can be measured by a laser diffraction/scattering particle size distribution measurement apparatus.

(Other components)

The thermosetting resin composition may contain other components as long as the object and effect of the present invention are not impaired. Examples of the other components include amine compounds such as tertiary amines and imidazole, phosphines, phosphorus compounds such as phosphonium, curing accelerators such as N,N-dimethylurea derivatives, reactive diluents, fillers, antioxidants, flame retardants, and pigments, and other various additives. These other components are preferably 5% by mass or less, or 1% by mass or less with respect to a thermosetting resin composition.

<Polymer film>

The thermosetting prepreg according to the present disclosure may have, on both sides or one side thereof, release paper or a polymer film, for example, a polyethylene film. The release paper or polymer film can serve to protect the thermosetting prepreg. This release paper or polymer film can be removed, for example when a laminate (especially a fiber-reinforced composite material) is produced from thermosetting prepregs.

< Laminate >

A laminate can be formed by laminating thermosetting prepregs according to the present disclosure and optionally performing a thermosetting treatment. The laminate is in particular a fiber-reinforced composite material, more particularly a carbon-fiber-reinforced composite material. The laminate (the laminate of thermosetting prepregs) has a structure in which two or more thermosetting prepregs according to the present invention are laminated. The number of layers of thermosetting prepregs forming a laminate may be, for example, 2 to 200, 5 to 100, or 10 to 50.

The laminate may be in the form of a sheet and may have a thickness of, for example, 1 mm to 100 mm, 2 mm to 50 mm, 3 mm to 25 mm or 4 mm to 10 mm.

Such a laminate can be produced by conventionally known methods, including, for example, a manual lay-up, an automated tape lay-up (ATL), an automated fiber placement, a vacuum bagging, an autoclave curing, a non-autoclave curing, a fluid-assisted processing, a pressure-assisted processing, a match molding processes, a simple press curing, a press scrape curing, and a method using continuous hand pressing.

Specifically, for example, a laminate (in particular, a fiber-reinforced composite material) can be formed by laminating a plurality of thermosetting prepregs according to the present invention, and pressurizing to 0.2 to 1.0 MPa and heating at 150 to 204°C in an autoclave for 1 to 8 hours.

The laminate according to the present invention (in particular the fiber-reinforced composite) preferably exhibits, when measured according to the measuring method described in the Examples section, an electrical conductivity in the thickness direction of less than or equal to 3.5 k$\Omega$·cm, preferably of less than or equal to 0.3 k$\Omega$·cm, particularly preferably of less than or equal to 0.2 k$\Omega$·cm. The lower limit of the electrical conductivity in the thickness direction is not particularly limited, but may be, for example, 0.1 $\Omega$·cm or more or 1.0 $\Omega$·cm or more.

<<Method for producing thermosetting prepreg>>

The method for producing the thermosetting prepreg according to the present disclosure is not particularly limited. The thermosetting prepreg according to the present disclosure can be produced according to the following production method, for example, by producing thermosetting prepreg precursor sheets and superposing the thermosetting prepreg precursor sheets.

<<Method for producing thermosetting prepreg by superposing precursor sheets>>

One embodiment of the method for producing a thermosetting prepreg according to the present disclosure comprises the following steps (a) and (b):

(a) providing a thermosetting prepreg precursor sheet (precursor-provision step), wherein the precursor sheet has a fiber sheet and first and second thermosetting resin compositions, each of these compositions being impregnated in the fiber sheet and containing a thermosetting resin and a curing agent, and wherein in the cross section perpendicular to the plane direction of the fiber sheet, the first thermosetting resin composition is impregnated in a first outer region of the fiber sheet in the thickness direction, and the second thermosetting resin composition is impregnated in a second outer region of the fiber sheet in the thickness direction which is opposite to the first outer region;

(b) arranging the two thermosetting prepreg precursor sheets on top of each other such that the first outer region of the fiber sheet of one of the thermosetting prepreg precursor sheets faces the first outer region of the fiber sheet of the other of thermosetting prepreg precursor sheets (superposition step);

wherein, in the thermosetting prepreg precursor sheets, an equivalent ratio of the curing agent in the first thermosetting resin composition is higher than an equivalent ratio of the curing agent in the second thermosetting resin composition.

(Precursor-provision step)

In the precursor-provision step, one or more (particularly two) thermosetting prepreg precursor sheets are provided. With regard to the fiber sheet, the first thermosetting resin composition and the second thermosetting resin composition included in the thermosetting prepreg precursor sheet, reference can be made to the above descriptions regarding the thermosetting prepreg.

(Superposition step)

In the superposition step, two thermosetting prepreg precursor sheets are arranged on top of each other such that the first outer region of the fiber sheet of one of the thermosetting prepreg precursor sheets faces the first outer region of the fiber sheet of the other of the thermosetting prepreg precursor sheets.

Namely, in a laminate obtained by superposing the two thermosetting prepreg precursor sheets, the first outer region of each the two thermosetting prepreg precursor sheets faces each other, while the second outer region of each of the two thermosetting prepregs faces away from each other.

In this step, the two thermosetting prepreg precursor sheets may be two separate thermosetting prepreg precursor sheets or may be two portions of one thermosetting prepreg precursor sheet. In other word, for example, the above-described superposition may be performed by bending one precursor sheet.

Preferably, when the two precursor sheets are arranged on top of each other in the superposition step, the direction of fibers in the fiber sheets of the precursor sheets are aligned. In particular, when the fiber sheets are composed of fibers aligned in one direction, it is preferred that the direction of fibers in the fiber sheets of the two precursor sheets are substantially along the same direction. By doing so, it may be possible to reduce or substantially eliminate a resin composition being left between the two superposed precursor sheets.

Preferably, at the time of the superposition, the amount of a resin composition present between the first outer regions of the two thermosetting prepreg precursor sheets is reduced. More preferably, there is substantially no resin composition between the surface which is adjacent to the first outer region of one thermosetting prepreg precursor sheet and the surface which is adjacent to the first outer region of the other thermosetting prepreg precursor sheet, such that the fiber sheets of the two thermosetting prepreg precursor sheets are in contact with each other.

(Heating and Pressure Treatment)

In a preferred embodiment according to the present disclosure, after the two thermosetting prepreg precursor sheets are arranged on top of each other, a process for integrating them (e.g., a heat and pressure treatment) is performed to obtain a thermosetting prepreg. For this heat and pressure treatment, for example, a heat roller can be used. With regard to the heating and pressurizing conditions, the heating temperature is preferably 40 to 140°C, and the pressurizing condition is preferably 0.1 to 200 N/cm, particularly preferably 5 to 100 N/cm.

According to the above-described method of manufacturing a thermosetting prepreg by superposing two thermosetting prepreg precursor sheets, the outer regions of the two thermosetting prepreg precursor sheets which have a relatively high equivalent ratio of curing agent are to be present in the central region of a thermosetting prepreg obtained as a result of the superposition. Therefore, according to this method of the present disclosure, the thermosetting prepreg according to the present disclosure can be obtained relatively simply and efficiently.

The method of manufacturing a thermosetting prepreg according to the present disclosure may comprise a step of arranging release paper or a polymer film on both sides or one side (one or two main surfaces) of the thermosetting prepreg. In other words, in one embodiment of the present disclosure, the thermosetting prepreg obtained by superposing two thermosetting prepreg precursor sheets may be provided in a state in which both surfaces or one surface thereof is covered with release paper or a polymer film. The release paper or the polymer film can in particular be arranged such that both sides or the one side (one or two main surfaces) of the thermosetting prepreg are entirely covered. Examples of the polymer film include a polyethylene film.

<Method for producing thermosetting prepreg precursor sheet>

The thermosetting prepreg precursor sheet which can be used in the above method can be produced by the following method:
A method comprising:

> providing a fiber sheet (a step of providing a sheet),
> providing a first thermosetting resin composition comprising a thermosetting resin and a curing agent (a step of providing first resin composition);
> providing a second thermosetting resin composition comprising a thermosetting resin and a curing agent (a step of providing second resin composition);
> arranging the first thermosetting resin composition on one main surface of the fiber sheet (a step of arranging first resin composition);
> arranging the second thermosetting resin composition on the other main surface of the fiber sheet (a step of arranging second resin composition); and
> impregnating the fiber sheet with at least part of the first thermosetting resin composition and the second thermosetting resin composition in order to form a thermosetting prepreg precursor sheet (a step of impregnation);

wherein an equivalent ratio of the curing agent in the first thermosetting resin composition is higher than the equivalent ratio of the curing agent in the second thermosetting resin composition.

(Step of providing a sheet)

In the step of providing a sheet, a fiber sheet is provided. With regard to the fiber sheet, reference may be made to the above description regarding the thermosetting prepreg. The fiber sheet may have a thickness of 0.01 to 1.8 mm, 0.02 to 1.5 mm or 0.04 to 1.1 mm. The basis weight of the fiber sheet may be 25 to 500 $g/m^2$, preferably 50 to 400 $g/m^2$, and more preferably 100 to 300 $g/m^2$.

(Step of providing first resin composition, step of providing second resin composition)

In the step of providing first resin composition and the step of providing second resin composition, a first thermosetting resin composition and a second thermosetting resin composition are provided, respectively. These resin compositions comprise a thermosetting resin and a curing agent, and may optionally further comprise a thermoplastic resin and an electrically conductive material. With regard to the resin compositions and its components, reference may be made to the above description regarding the thermosetting prepreg.

The thermosetting resin compositions can be produced by kneading constituent components. The kneading temperature is appropriately adjusted in consideration of the viscosity, thermal characteristics, curing temperature, etc., of a resin to be blended, but is lower than or equal to the curing onset temperature, and preferably 50 to 120°C The kneading may be performed in one stage or in multiple stages. The mixing order of constituent components of a resin composition is not particularly limited.

As a kneading machine for kneading, a known kneading machine can be used, and for example, a roll mill, a planetary mixer, a kneader, an extruder, a Banbury mixer, etc., can be used.

The thermosetting resin composition provided in the providing steps may be, for example, in the form of a sheet.

A method for producing a thermosetting resin composition in the form of a sheet (hereinafter also referred to as a "resin composition sheet" or "resin sheet") is not particularly limited, and can be produced by a known method. For example, a die coater, an applicator, a reverse roll coater, a comma coater, a knife coater, etc., can be used to apply (flow casting, casting, etc.,) a resin composition to a support such as release paper or a release sheet, in order to produce a thermosetting resin composition in the form of a sheet.

Specifically, for example, a prepared thermosetting resin composition may be coated on release paper using a film coater and dried to form a sheet, and peeled from the release paper, in order to produce a sheet of a thermosetting resin composition.

When the thermosetting resin composition contains an epoxy resin, usually, the processing temperature during the production of a sheet is preferably 70 to 160°C, and more preferably 75 to 140°C.

The thickness of a resin sheet is preferably 2 to 500 $\mu$m, and more preferably 5 to 100 $\mu$m. The basis weight of a resin sheet may be 10 to 200 $g/m^2$, preferably 20 to 100 $g/m^2$, and more preferably 30 to 75 $g/m^2$.

Preferably, the viscosity (V1 (units: Pa·s)) at 50°C of the first thermosetting resin composition is higher than the viscosity (V2 (units: Pa·s)) at 50°C of the second thermosetting resin composition, and in particular, the difference between these viscosities (V1-V2) is 10 or more, 25 or more, 50 or more, 75 or more, 100 or more, 150 or more, 200 or more, 250 or more, 300 or more, 400 or more, or 500 or more. The upper limit of the difference (V1-V2) may be, for example, 3000 or less, 2600 or less, 2000 or less, 1500 or less, 1000 or less, or 750 or less.

The viscosity at 50°C of the first thermosetting resin composition is preferably 500 to 10000 Pa·s or 550 to 5000 Pa·s, more preferably 600 to 3000 Pa·s or 600 to 2000 Pa·s, even more preferably 650 to 1500 Pa·s or 650 to 1000 Pa·s, most preferably 700 to 900 Pa·s.

The viscosity at 50°C of the second thermoset composition is preferably, 100 to 1250 Pa·s, 100 to 1000 Pa·s or 200 to 1000 Pa·s, more preferably 400 to 800 Pa·s, even more preferably 500 to 750 Pa·s.

(Step of arranging first resin composition, step of arranging second resin composition)

In the step of arranging first resin composition and the step of arranging second resin composition, the first thermosetting resin composition and the second thermosetting resin composition are disposed on the first main surface and the second main surface of the fiber sheet, respectively. In this step, for example, the first and second thermosetting resin compositions in the form of a sheet (e.g. in the form of a resin film) can be laminated on, in particular laminated directly on, the main surfaces of the fiber sheet, respectively.

When the first thermosetting resin composition and the second thermosetting resin composition are in the form of a sheet, the ratio (M1/M2) of the basis weight M1 (g/m$^2$) of the first thermosetting resin composition in the form of a sheet to the basis weight M2 (g/m$^2$) of the second thermosetting resin composition in the form of a sheet may be 0.25 to 4.0, preferably 0.3 to 3.0 or even 0.5 to 2.0.

In one embodiment of the present disclosure, the basis weight M1 (g/m$^2$) of the first thermosetting resin composition in the form of a sheet is higher than the basis weight M2 (g/m$^2$) of the second thermosetting resin composition in the form of a sheet. In this case, it may be possible to obtain a prepreg which exhibits particularly good prepreg tackiness and composite compression properties. In this embodiment, the ratio M1/M2 may be, for example, 1.2 to 3.0, 1.4 to 2.8, or 1.6 to 2.6.

In another embodiment of the present disclosure, the basis weight M1 (g/m$^2$) of the first thermosetting resin composition in the form of a sheet is lower than the basis weight M2 (g/m$^2$) of the second thermosetting resin composition in the form of a sheet. In this case, it may be possible to obtain a prepreg which exhibits particularly good compression-after-impact strength of a composite. In addition, in this case, particularly excellent electrical conductivity (in particular, electrical conductivity in the thickness direction) may be obtained. In this embodiment, the ratio M1/M2 may be, for example, 0.2 to 0.9, 0.3 to 0.8, or 0.4 to 0.7.

(Step of impregnation)

In the impregnation step, the first thermosetting resin composition and the second thermosetting resin composition are at least partially impregnated into a fiber sheet.

A method for impregnating a thermosetting resin composition into a fiber sheet is not particularly limited, but mention may be made of a preferable method in which a fiber sheet is impregnated with a resin composition having reduced viscosity by heating (a dry method).

In the impregnation step, for example, heat and pressure are optionally applied to an intermediate laminate obtained after the step of arranging first resin composition and the step of second resin composition, i.e., an intermediate laminate composed of a sheet of the first thermosetting resin composition, a fiber sheet and a sheet of the second thermosetting resin composition, so that the resin compositions are impregnated. In order to apply heat and pressure, for example, a hot roller, etc., may be used for hot pressing, and for example, the intermediate laminate can be heated and passed between two rollers, in order to perform the impregnation.

The heating temperature of the impregnation treatment can be appropriately determined in consideration of the viscosity, curing temperature, etc., of a thermosetting resin composition. When a thermosetting resin composition contains an epoxy resin, the heating temperature is preferably 70 to 160°C, more preferably 90 to 140°C.

The duration of the impregnation treatment is preferably 10 to 300 seconds.

The pressure condition of the impregnation treatment can be appropriately determined in consideration of the viscosity, curing temperature, etc., of a thermosetting resin composition. Preferably, the condition of the pressure treatment in the impregnation process is 1 to 245 N/cm (0.1 to 25 kg/cm), more preferably 9.8 to 147 N/cm (1 to 15 kg/cm), or 9.8 to 50 N/cm (1 to 5 kg/cm), in linear pressure,.

The impregnation treatment may be performed once or multiple times.

In the impregnation step, the first thermosetting resin composition and the second thermosetting resin composition may each be completely impregnated into a fiber sheet, or a portion of the first thermosetting resin composition and/or the second thermosetting resin composition may remain on the surface of a fiber sheet. A resin composition remaining on the surface of a fiber sheet can form a resin layer.

In one embodiment according to the present disclosure, substantially all of the first thermosetting resin composition is impregnated into the fiber sheet, while a portion of the second thermosetting resin composition remains on the surface of the fiber sheet without being impregnated into the fiber sheet and forms a resin layer there. For this purpose, the basis weight of a fiber sheet, heating and pressurizing conditions, and/or viscosity of a resin composition can be adjusted as appropriate. The formation of a resin layer can also be promoted by adding interlayer particles to a thermosetting resin composition.

<A method for producing a thermosetting prepreg by sequentially impregnating the first and second resin compositions>

The thermosetting prepreg according to the present disclosure can also be produced by sequentially impregnating a fiber sheet with a first and second thermosetting resin compositions (hereinafter, this method is referred to as "sequential impregnation method").

Specifically, the method comprises:

providing a fiber sheet (a step of providing a sheet),
providing a first thermosetting resin composition comprising a thermosetting resin and a curing agent (a step of providing first resin composition);

providing a second thermosetting resin composition comprising a thermosetting resin and a curing agent (a step of providing second resin composition);

arranging the first thermosetting resin composition on one main surface of the fiber sheet (a step of arranging first resin composition);

impregnating the fiber sheet with at least part of the first thermosetting resin composition (a step of first resin composition impregnation);

arranging the second thermosetting resin composition on the main surface of the fiber sheet which has been impregnated with the first resin composition (a step of arranging second resin composition); and

impregnating the fiber sheet with at least part of the second thermosetting resin composition in order to form a thermosetting prepreg (a step of second resin composition impregnation);

wherein an equivalent ratio of the curing agent in the first thermosetting resin composition is higher than an equivalent ratio of the curing agent in the second thermosetting resin.

(Sequential impregnation method: step of providing a sheet)

In the step of providing a sheet, a fiber sheet is provided. With regard to the fiber sheet, reference may be made to the above descriptions regarding the thermosetting prepreg. The thickness of the fiber sheet may be 0.01 to 4.0 mm, 0.05 to 2.0 mm or 0.1 to 1.0 mm. The basis weight of the fiber sheet may be 70 to 600 $g/m^2$, preferably 100 to 500 $g/m^2$, and more preferably 200 to 450 $g/m^2$.

(Sequential impregnation method: step of providing first resin composition, step of providing second resin composition)

In the step of providing first resin composition and the step of providing second resin composition, a first thermosetting resin composition and a second thermosetting resin composition are provided, respectively. These resin compositions comprise a thermosetting resin and a curing agent, and may optionally further comprise a thermoplastic resin and an electrically conductive material. These thermosetting resin compositions may be, for example, in the form of a sheet. With regard to the resin compositions and its components, reference may be made to the above descriptions regarding the thermosetting prepreg.

A thermosetting resin composition in the form of a sheet (resin composition sheet or resin sheet) can be produced in the same manner as described above. For example, a prepared thermosetting resin composition can be coated on release paper using a film coater and dried to form a sheet, and then peeled from the release paper in order to produce a thermosetting resin composition in the form of a sheet.

(Sequential impregnation method: Step of arranging first resin composition)

In the step of arranging first resin composition, the first thermosetting resin composition is arranged on the first main surface and/or the second main surface (preferably on the first and second main surfaces) of a fiber sheet. In this step, for example, two sheets of the first thermosetting resin composition (e.g. in the form of a resin film) can be laminated on two main surfaces of a fiber sheet, respectively.

(Sequential impregnation method: Step of impregnating first resin composition)

In the step of impregnating first resin composition, the first thermosetting resin composition is at least partially impregnated into a fiber sheet. In this step, for example, heat and pressure are applied to the fiber sheet having sheets of the first thermosetting resin composition arranged on both main surfaces thereof (i.e., first intermediate laminate), so that the resin compositions are impregnated. In order to apply heat and pressure, for example, a hot roller, etc., may be used for hot pressing, and for example, the first intermediate laminate can be heated and passed through between two rollers, in order to perform the impregnation.

(Sequential impregnation method: Step of arranging second resin composition)

In the step of arranging second resin composition, the second thermosetting resin composition is disposed on the first main surface and/or the second main surface (preferably on the first and second main surfaces) of a fiber sheet impregnated with the first thermosetting resin composition. In this step, for example, each of two sheets of the second thermosetting resin compositions (e.g. in the form of a resin film) can be laminated on one of two main surfaces of a fiber sheet, respectively.

(Sequential impregnation method: Step of impregnating second resin composition)

In the step of impregnating second resin composition, the second thermosetting resin composition is at least partially impregnated into a fiber sheet. In this step, for example, heat and pressure are applied to the fiber sheet impregnated with the first thermosetting resin composition and having sheets of the second thermosetting resin composition disposed on both surfaces thereof (i.e., second intermediate laminate), so that the resin composition is impregnated. In order to apply heat and pressure, a hot press, such as a hot roller, may be used, and for example the second intermediate laminate can be heated and passed through between two rollers while heating, in order to perform the impregnation.

According to the above method, the outer region of a fiber sheet which has been impregnated with a resin composition having a relatively high equivalent ratio of curing agent is impregnated with a resin composition having a relatively low equivalent ratio of curing agent, and thus the thermosetting prepreg according to the present disclosure can be produced which has a relatively high equivalent ratio of a curing agent in the central region.

In general, when an additional resin composition sheet is superposed on a fiber sheet which has already been impregnated with a resin composition and then heated and pressurized, it is considered that the impregnation of the additional resin composition into the fiber sheet is hindered due to the resin composition which has been previously impregnated into the fiber sheet.

On the other hand, when, for example, the amount of a first thermosetting resin composition impregnated into a fiber sheet is reduced, it is possible to sufficiently perform impregnation of a second thermosetting resin composition into a fiber sheet which has already been impregnated with the first thermosetting resin composition. In this case, since gaps may be present in the fiber sheet and the second thermosetting resin composition can be impregnated into these gaps, the second thermosetting resin composition can be impregnated relatively easily.

For this purpose, for example, the first thermosetting resin composition which is impregnated in a fiber sheet may be 10% by mass or more, 12% by mass or more, or 14% by mass or more, and/or may be 30% by mass or less, less than 30% by mass, 28% by mass or less, 26% by mass or less, 24% by mass or less, or 22% by mass or less, with respect to the mass of a fiber sheet.

Further, for example, the basis weight (g/cm$^2$) of the sum of sheet(s) of the first thermosetting resin composition arranged on a fiber sheet in the step of arranging first resin composition may be 10% or more, 12% or more, 14% or more, or 16% or more, and/or may be 30% or less, less than 30%, 28% or less, 26% or less, or 24% or less, with respect to the basis weight (g/cm$^2$) of the fiber sheet.

Further, in order to impregnate a fiber sheet, which has been impregnated with the first thermosetting resin composition, with the second thermosetting resin composition, the heating temperature during the step of second resin composition impregnation may be set to 70 to 140°C and the pressing condition may be set to 9.8 to 245 N/cm. It is considered that by performing the impregnation treatment under such conditions, the viscosity of the thermosetting resin composition decreases and the impregnation of the second thermosetting resin composition is accelerated.

[Examples]

Hereinafter, the present invention will be described in more detail by way of Examples, but the present invention is not limited to the Examples. Components and test methods used in the examples and comparative examples are described below.

< Viscosity>

For viscosity, a rheometer (product name: ARES-G2) manufactured by TA Instruments Co., Ltd. was used, and viscosity was measured using parallel plates having 25 mm-diameter with the thickness of a resin composition between the plates being set as 0.5 mm, under the condition of up to 180°C at a heating rate of 2°C/min and at an angular velocity of 10 radians per second, and then a resin viscosity was determined from a temperature-viscosity curve.

<Impregnation level>

Impregnation level of a prepreg, i.e., the degree of impregnation of a resin composition into a fiber sheet, can be assessed by measuring the water absorption rate (WPU) based on the water absorption test. Specifically, the measurement is performed by the following steps:
One ply of prepreg is cut to 100 mm×100 mm. After removing a backing paper, the mass (W1) of the one ply of prepreg is measured for each sample. The prepreg is then securely fixed in the WPU device so that the 0° fiber orientation is perpendicular to the water surface. When the fixed prepreg is placed vertically in the device, 5mm of the prepreg is immersed in water at room temperature in a laboratory environment at 23°C and 50% RH. After 5 minutes of immersion, the sample is removed from the water, the outer excess water is removed, the weight (W2) of the sample is measured again, and the percentage of water absorption from the initial condition (WPU) is obtained using Equation (3) below.

$$WPU = (W1 - W2)/W1 \qquad \text{Equation (3)}$$

Percent WPU of water absorption (%) is calculated by averaging the weights measured for three samples. Thereafter, the evaluation was performed according to the following evaluation criteria.

"◎" (Very good): WPU was less than 3%
"○" (Good): WPU was 3% or more and less than 5%
"△" (Moderate): WPU was 5% or more and less than 10%
"×" (Poor): WPU was 10% or more

<Tackiness>

Tackiness of a prepreg was evaluated using a tackiness test device (product name: TAC-II, manufactured by RHESCA Co., Ltd.). Specifically, a prepreg was set in a test stage held at 27°C, and the initial load 100 gf was applied with a stainless-steel cylindrical tack probe of Φ5 held at 27°C and after withdrawal at 10mm/sec test rate, the maximum load ($F_0$ and $F_{14}$) was determined.

The tack probe test was performed on a prepreg immediately after production ($F_0$) and on a prepreg stored at temperature 26.7°C and humidity 65% for 14 days ($F_{14}$), respectively. The tackiness retention ratio was calculated by the following Equation (4), and the calculation result was expressed by the following criteria:

$$\text{Tackiness retention rate} = 100 \cdot (F_0\text{-}F_{14}) / F_0 \qquad \text{Equation (4)}$$

"◎" (Very good): The load immediately after production was 500 gf or more, and the tackiness retention rate after storage for 14 days was 80% or more.
"○" (Good): The load immediately after production was 500 gf or more, and the tackiness retention rate after storage for 14 days was 50% or more and less than 80%.
"△" (Moderate): The load immediately after production was 500 gf or more, and the tackiness retention rate after storage for 14 days was 25% or more and less than 50%.
"×" (Poor): The load immediately after production was 500 gf or more, and the tackiness retention rate after storage for 14 days was less than 25%.

<Compression Characteristics>

Compression characteristics were performed as follows:
A prepreg was cut into squares having sides of 360 mm and laminated to obtain a laminate having a laminate configuration [+ 45/0/-45/90]$_{nS}$. A conventional vacuum-autoclaving mold method was used to perform molding at 180°C under 0.59 MPa pressure for 2 hours. The obtained molded article was cut to dimensions of 38.10 mm width $\times$304.8 mm length to prepare a test piece, and then the test piece was perforated to form a hole of 6.35 mm-diameter in the center portion thereof, in order to obtain a test piece for the open hole compression (OHC) strength test. The test piece was used to measure the compressive (OHC) strength according to SACMA SRM 3R-94. The crosshead speed of the compression tester for the test piece was set to 1 mm/min and measurements were conducted for five test pieces.

<Compression-after-impact strength>

The compression-after-impact strength was carried out as follows:
A prepreg was cut into squares having sides of 360 mm and laminated to obtain a laminate having a laminate configuration [+ 45/0/-45/90]$_{nS}$. A conventional vacuum-autoclaving mold method was used to perform molding at 180°C under 0.59 MPa pressure for 2 hours. The resulting molded article was cut into dimensions of 100 mm width by 150 mm length. to obtain a test piece for compression-after-impact (CAI) strength test. Using this test piece, the compression-after-impact (CAI) strength was measured according to SACMA SRM 2R-94, by imparting 30J impact and causing damage. The crosshead speed of the compression tester for the test piece was set to 1 mm/min and measurements were performed for five test pieces.

<Electrical conductivity in thickness direction>

Electrical conductivity in the thickness direction (volume resistivity) was performed by measuring the volume resistivity in the Z direction (thickness direction) with respect to the composite (composite material) produced as described below using a digital ohmmeter (AX-111A, manufactured by ADEX Co., Ltd.). Volume resistivity is the resistivity of a given material. The Z-direction volume resistivity $\rho$ of the material was calculated by the following formula.

$$\rho = RA/L$$

R: Electrical resistance ($\Omega$) of a uniform test piece from a material
L: Thickness (m) of a test piece
A: Cross sectional area ($m^2$) of a test piece

Manufacture of a composite and the measurement of electrical conductivity in the thickness direction were carried out as follows:
A prepreg was cut and laminated to obtain a laminate having a laminate structure of $[+45/0/-45/90]_{2S}$. Vacuum-autoclaving mold method was used to perform molding at 180°C under 0.59 MPa pressure for 2 hours. The obtained molded article was cut into dimensions of 40 mm width by 40 mm length, and the upper and lower surfaces of the molded article were polished using sandpaper until the carbon fibers were exposed, and finally, surface finishing was performed using sandpaper No. 2000. Thereafter, un-polished side surfaces were covered with a fluorine tape, and a copper plating treatment was conducted on the polished upper and lower surfaces by the copper electroplating method using copper sulfate as an electrolytic solution and using copper as an electrode plate in order to obtain a test piece, which was then sandwiched between gold plated-electrodes of 50 mm with $\times$ 50 mm length, and a 0.06 MPa load was applied to the test piece and the resistivity in the Z-direction was measured using a digital ohmmeter, so as to determine the conductivity in the thickness direction from the above equation.

[Component]

Components according to Examples and Comparative Examples are as follows.

(Epoxy resin)

Epoxy resin [A]

A-1: tetraglycidyl-4,4'-diaminodiphenylmethane (hereinafter abbreviated as "TGDDM") (manufactured by Nippon Steel Chemical & Material Co., Ltd., product name: YH-404)
A-2: bisphenol A-diglycidyl ether (hereinafter abbreviated as "DGBPA") (manufactured by Nippon Steel Chemical & Material Co., Ltd., product name: YD-8125)
A-3: GAN (Nippon Kayaku Co., Ltd.)
A-4: GOT (Nippon Kayaku Co., Ltd.)
A-5: Triglycidyl-m-aminophenol (hereinafter abbreviated as "m-TGAP") (Araldite, manufactured by Huntsman Corporation, product name: MY0600)

(Curing agent (Amine-based curing agent))

B-1: 4,4-diaminodiphenylsulfone (hereinafter abbreviated as "44DDS") (manufactured by Wakayama Seika Corporation, Product name: SEIKACURE-S)
B-2: 3,3'-diaminodiphenylsulfone (hereinafter abbreviated as "33DDS") (manufactured by Konishi Chemical Ind Co., Ltd., product name: 33DAS)
B-3: 3,3'-diaminodiphenylsulfone ground product (obtained from33DDS by adjusted in a grinder to a mean particle diameter of 5 $\mu$m, hereinafter abbreviated as "33DDS ground product")

(Thermoplastic resin soluble in epoxy resin)

C-1: Polyether sulfone (hereinafter abbreviated as "PES") (manufactured by Sumitomo Chemical Co., Ltd., product name: SUMIKAEXCEL PES-5003MP, mean particle diameter: 50 $\mu$m)

(Thermoplastic resin insoluble in epoxy resin (interlayer particles))

D-1: Polyamide resin (hereinafter abbreviated as "PA1010") (manufactured by Daicel Evonik Co., Ltd., product name: MSP-A7723, mean particle diameter: 18 $\mu$m)
D-2: Polyamide 12 (hereinafter abbreviated as "PA12") (manufactured by Daicel Evonik Co., Ltd., product name: MSP-A7673, mean particle diameter: 20 $\mu$m)

(Electrically conductive material)

E-1: Carbon nanotube (hereinafter abbreviated as "CNT") (manufactured by Nanocyl, product name: NC7000, mean particle size 9.5 nm)
E-2: Carbon nanostructure (hereinafter abbreviated as "CNS") (manufactured by Cabot Corporation, product name: ATHLOS SR1200 CNS, mean particle size 10 to 20 nm)
E-3 : Milled fiber (manufactured by Mitsubishi Plastics Inc., product name :DIALEAD K223HM, milled fiber of pitch-based carbon fiber having an aspect ratio of 18, mean fiber length of 200 $\mu$m (catalogue value))

(Carbon fiber)

"Tenax (Trademark)" IMS65 E23 830 tex: (carbon fiber strand, tensile strength 5800 MPa, tensile modulus 290 GPa, manufactured by Teijin Limited)
"Tenax (Trademark)" ITS55 E23 1600 tex: (carbon fiber strand, tensile strength 5200 MPa, tensile modulus 280 GPa, manufactured by Teijin Limited)

<<Examples 1 to 4 and Comparative Examples 1 to 3>>

Thermosetting prepregs according to Examples 1 to 4 and Comparative Examples 1 to 3 were produced and evaluated for physical properties.

Example 1

(Preparation of resin composition 1)

In a kneading device, PES (18 parts by mass), which is a thermoplastic resin soluble in epoxy resin, was added to epoxy resins TGDDM (70 parts by mass), DGBPA (25 parts by mass) and GAN (5 parts by mass), and the mixture was stirred at 120°C for 60 minutes using a planetary mixer in order to completely dissolve PES in the epoxy resin, and then the resin temperature was cooled to 80°C or lower, in order to prepare an epoxy resin composition. Thereafter, using a roll mill, curing agents (total of 40 parts by mass) shown in Table 1 below were added to the above resin and kneaded in order to prepare a resin composition 1.

(Production of sheet of resin composition 1)

The resin composition 1 thus prepared was applied onto release paper using a film coater, in order to prepare a sheet (a resin film) of resin composition 1 which was 48 g/m$^2$.

(Preparation of resin composition 2)

In a kneading device, PES (15 parts by mass), which is a thermoplastic resin soluble in epoxy resin, and heat-treated PA1010 particles (13 parts by weight) were added to epoxy resins TGDDM (70 parts by mass), DGBPA(25 parts by mass) and GAN (5 parts by mass), and the mixture was stirred at 120°C for 60 minutes using a planetary mixer to completely dissolve PES in the epoxy resin, and then the resin temperature was cooled to 80°C or lower, in order to prepare an epoxy resin composition. Thereafter, using a roll mill, curing agents (total of 34 parts by mass) shown in Table 1 below were added to the resin and kneaded, in order to prepare a resin composition 2.

(Preparation of sheet of resin composition 2)

The resin composition 2 thus prepared was applied onto release paper using a film coater, in order to prepare a sheet (a resin film) of resin composition 2 which was 48 $g/m^2$.

(Preparation of thermosetting prepreg precursor sheet)

Next, a carbon fiber sheet, in which carbon fiber bundles of carbon fibers (manufactured by Teijin Limited, product name: IMS65) as reinforcing fibers were unidirectionally arranged, was provided, and the sheet of the resin composition 1 prepared as above and the sheet of the resin composition 2 prepared as above were stacked on each side of the carbon fiber sheet, respectively. Thereafter, the resin composition 1 and the resin composition 2 were impregnated into the carbon fiber sheet by heat and pressure treatment under conditions of 110°C and 15 N/cm using a heat roller, in order to produce a unidirectional prepreg precursor sheet (the thermosetting prepreg precursor sheet according to Example 1) having a 190 $g/m^2$ basis weight of carbon fibers and a 35.0 % mass fraction of matrix resin.

Two thermosetting prepreg precursor sheets were prepared as above, and the two precursor sheets were arranged on top of each other such that sides of their main surfaces which are impregnated with the resin composition 1 face each other, and then heated and pressurized under conditions of 50°C and 15 N/cm using a heat roller to integrate the two precursor sheets, in order to produce a unidirectional prepreg sheet (the thermosetting prepreg according to Example 1) having a 380 $g/m^2$ basis weight of carbon fibers and a 35.0 % mass fraction of matrix resin. The evaluation results of the characteristics of the prepreg according to Example 1 are shown in Table 1 below.

A composite material was manufactured using the produced thermosetting prepreg according to Example 1. Specifically, 24 sheets of the thermosetting prepregs according to Example 1 were laminated in the form of a lamination structure of $[45°/0°/-45°/90°]_{3s}$ and subjected to a thermosetting treatment, in order to produce a composite material. The evaluation results of the characteristics for the composite material obtained are shown in Table 1 below.

Example 2A

The thermosetting prepreg according to Example 2A was produced in the same manner as in Example 1, except that the basis weight of resin film was changed as described in Table 1 below. The thermosetting prepreg according to Example 2A thus obtained was used to produce a composite material in the same manner as in Example 1. Evaluation results of the characteristics for the obtained prepregs and composite are shown in Table 1 below.

Example 2B

The thermosetting prepreg according to Example 2B was produced in the same manner as in Example 2A above, except that the amount of the interlayer particles and the basis weights of the resin composition 1 and resin composition 2 were changed as described in Table 1 below. The thermosetting prepreg according to Example 2B thus obtained was used to produce a composite material in the same manner as in Example 1. Evaluation results of the characteristics for the obtained prepreg and composite are shown in Table 1 below.

Example 3

The thermosetting prepreg according to Example 3 was produced in the same manner as in Example 1, except that the composition of resin composition (type and amount) was changed as described in Table 1 below. The thermosetting prepreg thus obtained was used to prepare a composite material in the same manner as in Example 1. Evaluation results of the characteristics for the obtained prepreg and composite are shown in Table 1 below.

Example 4

(Preparation of resin composition 1')

In a kneading device, PES (20 parts by mass), which is a thermoplastic resin soluble in epoxy resin, was added to epoxy resins TGDDM(45 parts by mass), DGBPA(50 parts by mass) and GAN (5 parts by mass), and the mixture was stirred at 120°C for 60 minutes using a planetary mixer to completely dissolve PES in the epoxy resin, and then the resin temperature was cooled to 80°C or lower, in order to prepare an epoxy resin composition. Thereafter, using a roll mill, curing agents (total of 36 parts by mass) shown in Table 1 below were added to the above resin and kneaded, in order to prepare a resin composition 1'.

(Preparation of sheet of resin composition 1')

The resin composition 1' thus prepared was applied onto release paper using a film coater to prepare a sheet of resin composition 1' which was 68 g/m$^2$.

(Preparation of resin composition 2')

In a kneading device, PES(20 parts by mass), which is a thermoplastic resin soluble in epoxy resin, and heat-treated PA1010 particles (35 parts by mass) were added to epoxy resins TGDDM(45 parts by mass), DGBPA(50 parts by mass) and GOT (5 parts by mass), and the mixture was stirred at 120°C for 60 minutes using a planetary mixer in order to completely dissolve PES in the epoxy resin, and then the resin temperature was cooled to 80°C or lower, in order to prepare an epoxy resin composition. Thereafter, using a roll mill, curing agents (total of 32 parts by mass) shown in Table 1 below were added to the above resin and kneaded, in order to prepare a resin composition 2'.

(Preparation of sheet of resin composition 2')

The resin composition 2' thus prepared was applied on release paper using a film coater to prepare a sheet of resin composition 2' which was 68 g/m$^2$.

(Preparation of thermosetting prepreg precursor sheet)

Next, a carbon fiber sheet, in which carbon fiber bundles of carbon fibers (manufactured by Teijin Limited, product name: IMS65) as reinforcing fibers were unidirectionally arranged, was provided, and the sheet of the resin composition 1' prepared as above and the sheet of the resin composition 2' prepared as above were stacked on each side of the carbon fiber sheet, respectively. Thereafter, the resin composition 1' and the resin composition 2' were impregnated into the carbon fiber sheet by heat and pressure treatment under conditions of 110°C and 15 N/cm using a heat roller, in order to produce a unidirectional prepreg precursor sheet (the thermosetting prepreg precursor sheet according to Example 4) having a 260 g/m$^2$ basis weight of carbon fibers and a 35.0% mass fraction of matrix resin.

Two thermosetting prepreg precursor sheets were prepared as above, and the two precursor sheets were arranged on top of each other such that the sides of the main surfaces impregnated with the resin composition 1' face to each other, and then heated and pressurized under conditions of 80°C and 50 N/cm using a heat roller to integrate the two precursor sheets, in order to produce a unidirectional prepreg sheet (the thermosetting prepreg according to Example 4) having a 520 g/m$^2$ basis weight of carbon fibers and a 35.0% weight fraction of matrix resin.

A composite material was produced using the thermosetting prepreg according to Example 4. Specifically, 16 sheets of the thermosetting prepregs according to Example 4 were laminated in the form of a lamination structure of $[45°/0°/-45°/90°]_{2s}$, and subjected to a thermosetting treatment to produce a composite material. The evaluation results of the characteristics for the composite material obtained are listed in Table 1 below.

Comparative Example 1

The thermosetting prepreg according to Comparative Example 1 was prepared in the same manner as in Example 1, except that the content of curing agents was changed as described in Table 1 below. The thermosetting prepreg thus prepared was used to produce a composite material (composite) in the same manner as in Example 1. The characteristics of the prepreg and composite thus obtained are shown in Table 1 below.

Comparative Example 2

Resin composition 1 was prepared in the same manner as in Example 1.

The resin composition 1 thus prepared was coated on release paper using a film coater and dried to form a sheet and then peeled from the release paper, in order to prepare two sheets of the resin composition 1 having a basis weight of 96 g/m$^2$.

Next, two sheets of the resin composition 1 thus prepared were respectively arranged on each of the surfaces of a carbon fiber sheet in which carbon fiber bundles of carbon fibers (manufactured by Teijin Limited, product name: IMS65) as reinforcing fibers were arranged in one direction. Thereafter, the resin composition 1 was impregnated into the carbon fiber sheet by heat and pressure treatment under conditions of 110°C and 15 N/cm using a heat roller, in order to produce a unidirectional prepreg sheet according to Comparative Example 2 (the thermosetting prepreg according to Comparative Example 2) having a 380 g/m² basis weight of carbon fibers and a 35.0% mass fraction of matrix resin. The evaluation results of the characteristics of the prepreg according to Comparative Example 2 are shown in Table 1 below.

The thermosetting prepreg according to Comparative Example 2 thus prepared was used to produce a composite material (composite) in the same manner as in Example 1, and the characteristics thereof were evaluated. The properties of the composite material obtained are shown in Table 1 below.

Comparative Example 3

The thermosetting prepreg according to Comparative Example 3 was prepared in the same manner as in Comparative Example 2, except that sheet of the resin composition 2 was used instead of the sheet of the resin composition 1. The thermosetting prepreg thus prepared was used to produce a composite material (composite) in the same manner as in Example 1. The characteristics of the prepreg and composite thus obtained are shown in Table 1 below.

[Table 1]

Table 1

| | Component | | | Unit | Ex.1 | Ex.2A | Ex.2B | Ex.3 | Ex.4 | Comp .Ex.1 | Comp .Ex.2 | Comp .Ex.3 |
|---|---|---|---|---|---|---|---|---|---|---|---|---|
| Resin composition 1 or r (composition of first resin composition) | Epoxy resin | A-1 | TGDDM | p.b.m. | 70 | 70 | 70 | 70 | 45 | 70 | 70 | - |
| | | A-2 | DGBPA | " | 25 | 25 | 25 | 25 | 50 | 25 | 25 | - |
| | | A-3 | GAN | " | 5 | 5 | 5 | - | 5 | 5 | 5 | - |
| | | A-4 | GOT | " | - | - | - | 5 | - | - | - | - |
| | Curing agent | B-1 | 44DDS | " | 20 | 20 | 20 | 20 | 18 | 15 | 20 | - |
| | | B-2 | 33DDS | " | 20 | 20 | 20 | 20 | 18 | 15 | 20 | - |
| | Soluble thermoplastic resin | C-1 | PES | " | 18 | 18 | 18 | 15 | 20 | 18 | 18 | - |
| Resin composition 2 or 2' (composition of second resin composition) | Epoxy resin | A-1 | TGDDM | " | 70 | 70 | 70 | 50 | 45 | 70 | - | 70 |
| | | A-2 | DGBPA | " | 25 | 25 | 25 | 40 | 50 | 25 | - | 25 |
| | | A-3 | GAN | " | 5 | 5 | 5 | - | - | 5 | - | 5 |
| | | A-4 | GOT | " | - | - | - | 10 | 5 | - | - | - |
| | Curing agent | B-1 | 44DDS | " | 17 | 17 | 17 | 16 | 16 | 20 | - | 17 |
| | | B-2 | 33DDS | " | 17 | 17 | 17 | 16 | 16 | 20 | - | 17 |
| | Soluble thermoplastic resin | C-t | PES | " | 15 | 15 | 15 | 10 | 20 | 15 | - | 15 |
| | Insoluble thermoplastic resin (interlayer particles) | D-1 | PA1010 | " | 13 | 13 | 22 | | 35 | 13 | - | 13 |
| | | D-2 | PA12 | " | - | - | - | 45 | - | - | - | - |
| Resin film basis weight of resin composition 1 or 1' | | | | g/m$^2$ | 48 | 61 | 35 | 48 | 68 | 48 | 96 | - |
| Resin film basis weight of resin composition 2 or 2' | | | | g/m$^2$ | 48 | 35 | 61 | 48 | 68 | 48 | - | 96 |

EP 4 497 778 A1

| | Component | General name | Unit | Ex.1 | Ex.2A | Ex.2B | Ex.3 | Ex.4 | Comp .Ex.1 | Comp .Ex.2 | Comp .Ex.3 |
|---|---|---|---|---|---|---|---|---|---|---|---|
| Ratio of basis weight of resin films (M1/M2) | | | - | 1.00 | 1.74 | 0.57 | 1.00 | 1.00 | 1.00 | - | - |
| Basis weight of carbon fiber sheet | | | g/m$^2$ | 190 x2 | 190 x2 | 190 x2 | 190 x2 | 260 x2 | 190 x2 | 380 | 380 |
| Equivalent ratio of curing agent of resin composition 1or1' | | | - | 0.82 | 0.82 | 0.82 | 0.83 | 0.82 | 0.62 | 0.82 | - |
| Equivalent ratio of curing agent of resin composition 2or 2' | | | - | 0.70 | 0.70 | 0.70 | 0.71 | 0.73 | 0.82 | - | 0.70 |
| Resin viscosity of resin composition 1 or 1' (50°C) | | | Pa*s | 813 | 813 | 813 | 718 | 883 | 772 | 813 | - |
| Resin viscosity of resin composition 2 or 2' (50°C) | | | Pa*s | 592 | 592 | 758 | 663 | 720 | 717 | - | 592 |
| Method for producing prepreg | | | - | Two-layered | Two-layered | Two-layered | Two-layered | Two-layered | Two-layered | One layer | One layer |
| Properties of prepreg | Impregnation level | | - | ◎ | ◎ | ○ | ◎ | ◎ | ◎ | × | △ |
| | tackiness | | - | ◎ | ◎ | ○ | ○ | ○ | ◎ | ○ | △ |
| Properties of composite | Compression properties (OHC) | | MPa | 323 | 331 | 317 | 328 | 319 | 311 | 290 | 283 |
| | Compression-After-Impact strength (CAI) 30J | | MPa | 242 | 238 | 251 | 283 | 264 | 229 | 174 | 235 |

◎= Very good
○= Good
△= Moderate
× = Poor
p.b.m. = parts by mass

As shown in Table 1, the thermosetting prepregs of Examples 1 to 4 exhibited favorable handleability (impregnation level and tackiness) brought about by a resin having low equivalent ratio of curing agents as well as favorable mechanical properties (compression properties and compression-after-impact properties) brought about by a resin having higher equivalent ratio of curing agents, as compared to the thermosetting prepregs of Comparative Examples 2 and 3 which were produced using only one resin composition.

In addition, the thermosetting prepreg of Comparative Example 1 exhibited properties inferior to those of Examples 1 to 4 in terms of mechanical properties. In the prepreg of Comparative Example 1, the equivalent ratio of curing agent of the first resin composition impregnated in the central region is lower than the equivalent ratio of curing agent of the second resin composition impregnated in the outer region. Without wishing to be bound by theory, it is considered that, in Comparative Example 1, the mechanical properties were insufficient because it is not possible to ensure a sufficient crosslink density of thermosetting resins in the central region.

<Example 5>

The thermosetting prepreg according to Example 5 was produced, and the physical properties thereof were evaluated. In Example 5, a prepreg was prepared as follows using only one fiber sheet.

Resin composition 1 was prepared in the same manner as in Example 1.

The resin composition 1 thus prepared was coated on release paper using a film coater and dried to form a sheet and then peeled from the release paper, in order to prepare two sheets of the resin composition 1 having a basis weight of 48 $g/m^2$.

Resin composition 2 was prepared in the same manner as in Example 1.

The prepared resin composition 2 was coated on release paper using a film coater and dried to form a sheet and then peeled from the release paper, in order to prepare two sheets of the resin composition 2 having a basis weight of 48 $g/m^2$.

Next, two sheets of the resin composition 1 prepared as above were respectively arranged on each of the surfaces of a carbon fiber sheet in which carbon fiber bundles of carbon fibers (manufactured by Teijin Limited, product name: IMS65) as reinforcing fibers were arranged in one direction. Thereafter, the resin composition 1 was impregnated into the carbon fiber sheet by heat and pressure treatment under conditions of 110°C and 15 N/cm using a heat roller, in order to produce a unidirectional prepreg sheet having a 380 $g/m^2$ basis weight of carbon fibers and a 20.5% mass fraction of matrix resin.

Next, two sheets of the above-prepared resin composition 2 were respectively arranged on each of the surfaces of the carbon fiber sheet impregnated with the resin composition 1. Then, the resin composition 2 was impregnated into the carbon fiber sheet by heat and pressure treatment under conditions of 80°C and 15 N/cm using a heat roller, in order to produce a unidirectional prepreg sheet according to Example 5 (the thermosetting prepreg according to Example 5) having a 380 $g/m^2$ basis weight of carbon fibers and a 35.0% mass fraction of matrix resin. The evaluation results of the characteristics of the prepreg according to Example 5 are shown in Table 2 below.

The thermosetting prepreg according to Example 5 thus prepared was used to produce a composite material (composite) in the same manner as in Example 1 as described above, and the characteristics thereof were evaluated. The properties of the composite material thus obtained are shown in Table 2 below.

[Table 2]

Table 2

| | Component | | General name | Unit | Ex.5 | Comp.Ex.2 | Comp.Ex.3 |
|---|---|---|---|---|---|---|---|
| Resin composition 1 (composition of first resin composition) | Epoxy resin | A-1 | TGDDM | p.b.m. | 70 | 70 | - |
| | | A-2 | DGBPA | " | 25 | 25 | - |
| | | A-3 | GAN | " | 5 | 5 | - |
| | | A-4 | GOT | " | - | - | - |
| | Curing agent | B-1 | 44DDS | " | 20 | 20 | - |
| | | B-2 | 33DDS | " | 20 | 20 | - |
| | Soluble thermoplastic resin | C-1 | PES | " | 18 | 18 | - |

(continued)

| | Component | | General name | Unit | Ex.5 | Comp.Ex.2 | Comp.Ex.3 |
|---|---|---|---|---|---|---|---|
| Resin composition 2 (composition of second resin composition) | Epoxy resin | A-1 | TGDDM | " | 70 | - | 70 |
| | | A-2 | DGBPA | " | 25 | - | 25 |
| | | A-3 | GAN | " | 5 | - | 5 |
| | | A-4 | GOT | " | | - | |
| | Curing agent | B-1 | 44DDS | " | 17 | - | 17 |
| | | B-2 | 33DDS | " | 17 | - | 17 |
| | Soluble thermoplastic resin | C-1 | PES | " | 15 | - | 15 |
| | Insoluble thermoplastic resin (interlayer particles) | D-1 | PA1010 | " | 13 | - | 13 |
| | | D-2 | PA12 | " | - | - | - |
| Resin film basis weight of resin composition 1 | | | | g/m$^2$ | 48 | 96 | - |
| Resin film basis weight of resin composition 2 | | | | g/m$^2$ | 48 | - | 96 |
| Ratio of basis weight of resin films (M1/M2) | | | | | 1.00 | - | - |
| Basis weight of carbon fiber sheet | | | | g/m$^2$ | 380 | 380 | 380 |
| Equivalent ratio of curing agent of resin composition 1 | | | | - | 0.82 | 0.82 | - |
| Equivalent ratio of curing agent of resin composition 2 | | | | - | 0.70 | - | 0.70 |
| Resin viscosity of resin composition 1 (50°C) | | | | Pa*s | 813 | 813 | - |
| Resin viscosity of resin composition 2 (50°C) | | | | Pa*s | 592 | - | 592 |
| Method for producing prepreg | | | | - | One layer | One layer | One layer |
| Properties of prepreg | Impregnation level | | | - | ○ | × | △ |
| | tackiness | | | - | ○ | ○ | △ |
| Properties of composite | Compression properties (OHC) | | | MPa | 305 | 290 | 283 |
| | Compression-After-Impact strength (CAI) 30J | | | MPa | 234 | 174 | 235 |
| ○= Good △= Moderate × = Poor p.b.m. = parts by mass | | | | | | | |

As can be seen in Table 2, the prepreg according to Example 5, which was impregnated with the resin composition 1 having a relatively high equivalent ratio of curing agent and then further impregnated with the resin composition 2 having a relatively low equivalent ratio of curing agent, exhibited better prepreg properties and composite properties, as compared to Comparative Example 2 and Comparative Example 3 in which only a single resin composition was used. Without wishing to be bound by theory, it is considered that these effects of Example 5 were brought about by the use of two resin compositions having different properties such as different contents of curing agent. In particular, in the prepreg of Example 5, it is considered that the crosslink density of the thermosetting resin in the central region became relatively high, and as a result, good mechanical properties were exhibited. Incidentally, during the production of Example 5, since the amount of the resin composition 1 to be impregnated into a fiber sheet was relatively reduced, the resin composition 2 was impregnated relatively well into the fiber sheet which has been impregnated with the resin composition 1.

< <Examples 6A and 6B and Examples 7 to 11>

In Examples 6A and 6B and Examples 7 to 11, the effects of adding electrically conductive materials were evaluated.

Example 6A

The thermosetting prepreg according to Example 6A was produced in the same manner as in Example 1, except that the resin composition was prepared with components and contents as shown in Table 3 below, and that the type of carbon fibers as reinforcing fibers was changed (manufactured by Teijin Limited, product name: ITS55 E23 24K). The thermosetting prepreg according to Example 6 thus obtained was used to produce a composite material (composite) in the same manner as in Example 1. Evaluation results of the characteristics for the obtained prepreg and composite are shown in Table 3 below.

Example 6B

The thermosetting prepreg according to Example 6B was produced in the same manner as in Example 6A, except that a ratio (M1/M2) of the basis weight M1 (g/m$^2$) of the sheet of resin composition 1 to the basis weight M2 (g/m$^2$) of the sheet of resin composition 2 is changed to 0.57. Evaluation was conducted in the same manner as in Example 6A. The results are shown in Table 3 below.

Examples 7 to 11

Thermosetting prepregs according to Examples 7 to 11 were produced respectively in the same manner as in Example 6A, except that resin compositions were prepared with components and contents as shown in Table 3 below, and that the electrically conductive materials shown in Table 3 below (in Example 8, further additional electrically conductive material) were added. Incidentally, the electrically conductive materials were added to a resin using a roll mill after the addition of curing agents the amounts of which are shown in Table 3 below. The results of evaluation of the characteristics of the thermosetting prepregs according to Examples 7 to 11 thus obtained and of the composite material (composite) produced using these prepregs in the same manner as in Example 1 described above are shown in Table 3 below.

Comparative Examples 4 to 5

Thermosetting prepregs according to Comparative Examples 4 to 5 were produced in the same manner as in Example 7 above, except that a resin composition was prepared with components and contents shown in Table 3 below. The results of evaluation of the characteristics of the obtained thermosetting prepregs according to Comparative Examples 4 to 5 and of the composite material (composite) produced using these prepregs in the same manner as in Example 1 are shown in Table 3 below.

[Table 3]

Table 3

| | Component | | General name | Unit | Ex.6A | Ex.6B | Ex.7 | Ex.8 | Ex.9 | Ex.10 | Ex.11 | Comp .Ex.4 | Comp .Ex.5 |
|---|---|---|---|---|---|---|---|---|---|---|---|---|---|
| Resin composition 1 (composition of first resin composition) | Epoxy resin | A-1 | TGDDM | p.b.m. | 70 | 70 | 70 | 30 | 30 | 30 | 30 | 70 | 70 |
| | | A-2 | DGBPA | " | 25 | 25 | 25 | 65 | - | - | 65 | 25 | 25 |
| | | A-3 | GAN | " | 5 | 5 | 5 | - | 5 | 5 | - | 5 | 5 |
| | | A-4 | GOT | " | - | - | - | 5 | - | - | 5 | - | - |
| | | A-5 | m-TGAP | " | - | - | - | - | 65 | 65 | - | - | - |
| | Curing agent | B-1 | 44DDS | " | 20 | 20 | 20 | 16 | - | - | 16 | 13 | 17 |
| | | B-2 | 33DDS | " | 20 | 20 | 20 | 16 | 48 | - | 16 | 13 | 17 |
| | | B-3 | 33DDS Ground | " | - | - | - | - | - | 48 | - | - | - |
| | Soluble thermoplastic resin | C-t | PES | " | 18 | 18 | 19 | 19 | 20 | 21 | 19 | 18 | 18 |
| | Conductive agent | E-1 | CNT | " | - | - | 0.5 | 0.5 | 0.12 | 0.12 | - | 0.24 | 0.24 |
| | | E-2 | CNS | " | - | - | - | - | - | - | 0.24 | - | - |
| | Epoxy resin | A-1 | TGDDM | " | 70 | 70 | 70 | 30 | 30 | 30 | 30 | 70 | 70 |
| | | A-2 | DGBPA | " | 25 | 25 | 25 | 65 | - | - | 65 | 25 | 25 |
| | | A-3 | GAN | " | 5 | 5 | 5 | - | 5 | 5 | - | 5 | 5 |
| | | A-4 | GOT | " | - | - | - | 5 | - | - | 5 | - | - |
| | | A-5 | m-TGAP | " | - | - | - | - | 65 | 65 | - | - | - |

| | | | General name | Unit | Ex.6A | Ex.6B | Ex.7 | Ex.8 | Ex.9 | Ex.10 | Ex.11 | Comp .Ex.4 | Comp .Ex.5 |
|---|---|---|---|---|---|---|---|---|---|---|---|---|---|
| Resin compo-sition 2 (com-position of second resin composition) | Curing agent | B-1 | 44DDS | " | 17 | 17 | 17 | 15 | - | - | 15 | 13 | 20 |
| | | B-2 | 33DDS | " | 17 | 17 | 17 | 15 | 42 | - | 15 | 13 | 20 |
| | | B-3 | 33DDS Ground | " | - | - | - | - | - | 42 | - | - | - |
| | Soluble thermoplastic resin | C-1 | PES | " | 15 | 15 | 15 | 15 | 19 | 19 | 15 | 15 | 15 |
| | Insoluble ther-mo - plastic resin (inter-layer particles) | D-1 | PA1010 | " | 13 | 22 | 13 | 13 | - | - | 13 | 13 | 13 |
| | | D-2 | PA12 | " | - | - | - | - | 40 | 40 | - | - | - |
| | Conductive agent | E-1 | CNT | " | - | - | 0.5 | 0.5 | - | - | - | 0.5 | 0.5 |
| | | E-2 | CNS | " | - | - | - | - | - | - | 0.24 | - | - |
| | Additional conductive agent | E-3 | milled fiber | " | - | - | - | 1 | - | - | - | - | - |
| Ratio of basis weight of resin films (M1/M2) | | | | | 1.00 | 0.57 | 1.00 | 1.00 | 1.00 | 1.00 | 1.00 | 1.00 | 1.00 |
| Equivalent ratio of curing agent of resin composition 1 | | | | - | 0.82 | 0.82 | 0.82 | 0.78 | 0.86 | 0.86 | 0.78 | 0.54 | 0.70 |
| Equivalent ratio of curing agent of resin composition 2 | | | | - | 0.70 | 0.70 | 0.70 | 0.73 | 0.75 | 0.75 | 0.73 | 0.54 | 0.82 |
| Resin viscosity of resin composition 1 (50°C) | | | | Pa*s | 813 | 813 | 1031 | 923 | 2503 | 2817 | 1323 | 745 | 901 |
| Resin viscosity of resin composition 2(50°C) | | | | Pa*s | 592 | 672 | 817 | 851 | 626 | 602 | 971 | 485 | 637 |
| Method for producing prepreg | | | | - | Two-layered | Two-layered | Two-layered | Two-layered | Two-layered | Two-layered | Two-layered | Two-layered | Two-layered |
| Properties of composite | Compression properties (OHC) | | | MPa | 312 | 308 | 315 | 309 | 342 | 357 | 298 | 269 | 286 |
| | Conductivity in thickness direction | | | Ωcm | 189 | 57 | 45 | 31 | 49 | 37 | 28 | 30 | 42 |
| p.b.m. = parts by mass | | | | | | | | | | | | | |

EP 4 497 778 A1

31

As shown in Table 3, the thermosetting prepregs of Examples 6A and 6B and Examples 7-11 exhibited sufficient electrical conductivity in thickness direction. In particular, Examples 7-11, which contained electrically conductive materials, exhibited particularly good electrical conductivity in thickness direction as compared to Example 6A which did not contain any electrically conductive material. In addition, the thermosetting prepreg according to Example 8, which further comprised an additional electrically conductive material having a relatively large size in addition to the electrically conductive material, exhibited even better electrical conductivity in thickness direction as compared to the thermosetting prepregs having no additional electrically conductive material.

In addition, Examples 7 to 11 exhibited a comparable or better electrical conductivity than Comparative Examples 4 and 5, and also exhibited high composite properties than Comparative Examples 4 and 5. In Comparative Example 4, the equivalent ratio of curing agent in the first resin composition and the equivalent ratio of curing agent in the second resin composition are the same, and there is no difference between the equivalent ratio of curing agent in the outer region of the prepreg and the equivalent ratio of curing agent in the central region of the prepreg. Further, in Comparative Example 5, since the equivalent ratio of curing agent in the first resin composition is lower than the equivalent ratio of curing agent in the second resin composition, a resin composition having a relatively high equivalent ratio of curing agent is present in the outer region of the prepreg. In contrast, in Examples 7 to 11, a resin composition having a relatively high equivalent ratio of curing agent (first resin composition) is present in the central region of the prepreg. Without wishing to be bound by theory, it is considered that the composites according to Examples 7 to 11 exhibited better composite properties than the composites of Comparative Examples 4 and 5, as a result of relatively high crosslink density in the central region of the prepreg constituting the composite.

In addition, as can be seen in Table 3, a ratio (M1/M2), which is a ratio of the basis weights of the resin films at the time of producing the prepreg, was set to 0.57 in Example 6B, and better electrical conductivity in thickness direction was observed in this example as compared to Example 6A wherein the ratio was 1.00.

[Explanation of Reference numerals]

| | |
|---|---|
| 100 | thermosetting prepreg |
| 110, 210, 310 | fiber sheet |
| 120, 220 | resin layer |
| 112, 212, 322 | first thermosetting resin composition |
| 122, 222, 332 | second thermosetting resin composition |
| 150, 250, 350 | resin particle |
| 200, 200a, 200b | thermosetting prepreg precursor sheet |
| 314 | first main surface |
| 316 | second main surface |
| 320 | sheet of the first thermosetting resin composition |
| 330 | sheet of the second thermosetting resin composition |
| 340 | intermediate laminate |
| A | outer region |
| B | central region |
| A' | second outer region of the fiber sheet |
| B' | first outer region of the fiber sheet |
| T | thickness direction |

**Claims**

1. A thermosetting prepreg, comprising:

   a fiber sheet;
   a first thermosetting resin composition, wherein, in the cross section perpendicular to the plane direction of the fiber sheet, the first thermosetting resin composition being impregnated in the central region of the fiber sheet in the thickness direction; and
   a second thermosetting resin composition, wherein, in the cross section perpendicular to the plane direction of the fiber sheet, the second thermosetting resin composition being impregnated in the outer region of the fiber sheet in the thickness direction;

   wherein each of the first and second thermosetting resin compositions comprises a thermosetting resin and a curing agent,
and wherein the equivalent ratio of the curing agent in the first thermosetting resin composition is higher than the equivalent ratio of the curing agent in the second thermosetting resin composition.

2. The thermosetting prepreg according to claim 1, wherein, in the cross section perpendicular to the plane direction of the fiber sheet, a ratio of the thickness of the central region to the total thickness of the central region and the outer region is 10 to 90%.

3. The thermosetting prepreg according to claim 1 or 2, wherein each of the first and second thermosetting resin compositions further comprises a thermoplastic resin and an electrically conductive material.

4. The thermosetting prepreg of any one of claims 1 to 3, wherein the second thermosetting resin composition, which is impregnated in the outer region of the fiber sheet, is disposed on a surface of the fiber sheet.

5. The thermosetting prepreg according to claim 4, wherein the second thermosetting resin composition disposed on the surface of the fiber sheet comprises resin particles.

6. The thermosetting prepreg according to claim 4 or 5, wherein the second thermosetting resin composition disposed on the surface of the fiber sheet comprises an additional electrically conductive material.

7. The thermosetting prepreg according to any one of claims 1 to 6, wherein the viscosity at 50°C of the first thermosetting resin composition is higher than the viscosity at 50°C of the second thermosetting resin composition.

8. The thermosetting prepreg according to any one of claims 1 to 7,

   wherein the first thermosetting resin composition has the viscosity at 50°C of 500 to 10000 Pa·s,
   and the second thermosetting resin composition has the viscosity at 50°C of 100 to 1000 Pa·s.

9. The thermosetting prepreg according to any one of claims 1 to 8, wherein, when the thermosetting prepreg is heat-cured at 180°C for 120 minutes, there is, in the cross section perpendicular to the plane direction of the fiber sheet, a region where a crosslink density of the thermosetting resin is decreased from the center toward the surface of the fiber sheet in the thickness direction.

10. The thermosetting prepreg of any one of claims 1 to 9, wherein the thermosetting resin is an epoxy resin.

11. A laminate of thermosetting prepregs having a structure in which two or more thermosetting prepregs according to any one of claims 1 to 10 are laminated.

12. A method for producing a thermosetting prepreg, comprising:

    (a) providing a thermosetting prepreg precursor sheet, wherein the precursor sheet has a fiber sheet and first and second thermosetting resin compositions, each of these compositions being impregnated in the fiber sheet and containing a thermosetting resin and a curing agent, and wherein, in the cross section perpendicular to the plane direction of the fiber sheet, the first thermosetting resin composition is impregnated in a first outer region in the thickness direction of the fiber sheet, and the second thermosetting resin composition is impregnated in a second outer region in the thickness direction of the fiber sheet which is opposite to the first outer region; and
    (b) arranging the two thermosetting prepreg precursor sheets on top of each other such that the first outer region of the fiber sheet of one of the thermosetting prepreg precursor sheets faces the first outer region of the fiber sheet of the other of the thermosetting prepreg precursor sheets;

    wherein, in the thermosetting prepreg precursor sheets, the equivalent ratio of the curing agent in the first thermosetting resin composition is higher than the equivalent ratio of the curing agent in the second thermosetting resin composition.

13. A method for producing a thermosetting prepreg precursor sheet, comprising:

    providing a fiber sheet,
    providing a first thermosetting resin composition comprising a thermosetting resin and a curing agent;

providing a second thermosetting resin composition comprising a thermosetting resin and a curing agent;
arranging the first thermosetting resin composition on one main surface of the fiber sheet;
arranging the second thermosetting resin composition on the other main surface of the fiber sheet; and
impregnating the fiber sheet with at least part of the first thermosetting resin composition and the second thermosetting resin composition;

wherein the equivalent ratio of the curing agent in the first thermosetting resin composition is higher than the equivalent ratio of the curing agent in the second thermosetting resin composition.

14. The method according to claim 13, wherein a ratio (M1/M2) of the basis weight M1 $(g/m^2)$ of the first thermosetting resin composition in the form of a sheet to the basis weight M2 $(g/m^2)$ of the second thermosetting resin composition in the form of a sheet is 0.25 to 4.0.

15. The method according to claims 13 or 14, wherein the second thermosetting resin composition further comprises resin particles.

Fig. 1

Fig. 2

# Fig. 3

# INTERNATIONAL SEARCH REPORT

| International application No. |
|---|
| **PCT/JP2023/011518** |

**A. CLASSIFICATION OF SUBJECT MATTER**

***C08J 5/24***(2006.01)i; ***B29B 11/16***(2006.01)i
FI: C08J5/24 CFC; B29B11/16

According to International Patent Classification (IPC) or to both national classification and IPC

**B. FIELDS SEARCHED**

Minimum documentation searched (classification system followed by classification symbols)

C08J5/24; B29B11/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-142122 A (TOHO TENAX CO., LTD.) 22 July 2013 (2013-07-22)<br>claims, examples 1-8, fig. 1-3 | 1-2, 4-5, 7-15 |
| Y | | 3, 6 |
| Y | WO 2014/050896 A1 (TOHO TENAX CO., LTD.) 03 April 2014 (2014-04-03)<br>claims, paragraphs [0006], [0007], [0093], [0101] | 3, 6 |
| A | WO 2017/183497 A1 (SHOWA DENKO K.K.) 26 October 2017 (2017-10-26)<br>paragraph [0206] | 1-15 |
| A | WO 2012/133033 A1 (TOHO TENAX CO., LTD.) 04 October 2012 (2012-10-04)<br>comparative examples 1, 9 | 1-15 |
| A | JP 2021-172694 A (TEIJIN LTD.) 01 November 2021 (2021-11-01)<br>claims, example 1 | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/011518**

| Patent document cited in search report | | | Publication date (day/month/year) | Patent family member(s) | | | Publication date (day/month/year) |
|---|---|---|---|---|---|---|---|
| JP | 2013-142122 | A | 22 July 2013 | (Family: none) | | | |
| WO | 2014/050896 | A1 | 03 April 2014 | US | 2015/0274911 | A1 | |
| | | | | claims, paragraphs [0006], [0007], [0105], [0113] | | | |
| | | | | EP | 2902435 | A1 | |
| | | | | CN | 105164192 | A | |
| WO | 2017/183497 | A1 | 26 October 2017 | KR | 10-2018-0126029 | A | |
| | | | | CN | 109071954 | A | |
| | | | | TW | 201809050 | A | |
| WO | 2012/133033 | A1 | 04 October 2012 | US | 2014/0057515 | A1 | |
| | | | | comparative examples 1, 9 | | | |
| | | | | EP | 2692783 | A1 | |
| | | | | CN | 103347939 | A | |
| | | | | KR | 10-2014-0016885 | A | |
| JP | 2021-172694 | A | 01 November 2021 | (Family: none) | | | |

Form PCT/ISA/210 (patent family annex) (January 2015)

**REFERENCES CITED IN THE DESCRIPTION**

**Patent documents cited in the description**

- JP H6344519 A
- JP H834864 A

- WO 2014050896 A